# EUROPEAN PATENT APPLICATION

(11) **EP 4 746 602 A1**
(43) Date of publication of application: **20.05.2026**
(21) Application number: 24854420.7
(22) Date of filing: 09.08.2024
(51) Int. Cl.: H05K 5/03, C03C 17/00, G06F 1/16, H04M 1/02

(54) **COVER STRUCTURE AND ELECTRONIC DEVICE COMPRISING SAME**

(30) Priority: 11.08.2023 KR 20230105253; 26.09.2023 KR 20230129461
(71) Applicant: Samsung Electronics Co., Ltd., Suwon-si, Gyeonggi-do 16677 (KR)
(72) Inventor: CHO, Sungjin, Suwon-si Gyeonggi-do 16677 (KR); CHU, Chungwan, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/011917
(87) International publication number: WO 2025/037869

(57) **Abstract**

An electronic device according to an embodiment of the present disclosure may comprise: a first housing; a second housing; a flexible display panel including an area corresponding to the first housing and an area corresponding to the second housing; and a flexible cover structure disposed on the flexible display panel. The cover structure may comprise: a thin glass including a first area and a second area extending from the first area and corresponding to a bending or rolling area of the flexible display panel; a molding layer including a first pattern portion disposed on the first area of the thin film glass and a second pattern portion disposed on the second area of the thin film glass, wherein a thickness of the first pattern portion is different from a thickness of the second pattern portion; and a coating layer disposed on the molding layer, the coating layer having an overall uniform thickness over a distance from the thin film glass to the top surface of the coating layer.

## Description

### [Technical Field]

An embodiment of the disclosure relates to a display cover structure and an electronic device including the same.

### [Background Art]

With the development of electronic, information, and communication technologies, various functions are being integrated into one portable communication device or electronic device. For example, a smartphone includes not only a communication function but also functions of an audio playback device, an imaging device, or an electronic notebook, and even more diverse functions may be implemented in the smartphone through additional installation of applications.

As the use of personal or portable communication devices, such as smartphones, has become common, user demands for portability and ease of use are increasing. For example, a touch screen display may provide a virtual keypad that replaces a mechanical input device (e.g., a button input device) while serving as an output device that outputs a screen (e.g., visual information). Accordingly, portable communication devices or electronic devices have come to be capable of providing the same or further improved usability (e.g., a larger screen) while being miniaturized. On the other hand, with the commercialization of flexible, for example, foldable or rollable displays, it is expected that the portability and ease of use of electronic devices will be further improved.

The above-described information may be provided as related art for the purpose of assisting in understanding the disclosure. No assertion or decision is made as to whether any of the above might be applicable as prior art with regard to the disclosure.

### [Detailed Description of the Invention]

### [Technical Solution]

According to an embodiment of the disclosure, an electronic device may include a first housing, a second housing, a flexible display panel including an area corresponding to the first housing and an area corresponding to the second housing, and a flexible cover structure disposed on the flexible display panel. The cover structure may include a thin glass including a first area and a second area that extends from the first area and corresponds to a bending or rolling area of the flexible display panel, a molding layer including a first pattern part disposed on the first area of the thin glass and a second pattern part disposed on the second area of the thin glass, the thickness of the first pattern part being different from the thickness of the second pattern part, and a coating layer disposed on the molding layer, a distance from the thin glass to an upper surface of the coating layer having an overall uniform thickness.

According to an embodiment of the disclosure, a flexible cover structure of an electronic device may include a thin glass including a first area and a second area that extends from the first area and is bendable or rollable, a molding layer including a first pattern part disposed on the first area of the thin glass and a second pattern part disposed on the second area of the thin glass, the thickness of the first pattern part being different from the thickness of the second pattern part, and a coating layer that is disposed on the molding layer and is filled to have an identical height from the thin glass.

### [Brief Description of Drawings]

FIG. 1 is a block diagram illustrating an electronic device in a network environment according to an embodiment of the disclosure.
FIG. 2 is a view illustrating the state in which a second display area (e.g., the display area A2 of FIG. 3) of a display is accommodated according to an embodiment of the disclosure in the housing.
FIG. 3 is a view illustrating a state in which the second display area of the display is visible to the outside of the housing according to an embodiment of the disclosure.
FIG. 4 is a perspective view illustrating an area of a display cover structure of an electronic device according to an embodiment of the disclosure.
FIG. 5 is a cross-sectional view illustrating an area of the display cover structure in a slide-out state of the electronic device according to an embodiment of the disclosure.
FIG. 6 is a cross-sectional view illustrating an area of the display cover structure in a slide-in state of the electronic device according to an embodiment of the disclosure.
FIG. 7 is a cross-sectional view illustrating an area of the display cover structure in the slide-out state of an electronic device according to an embodiment of the disclosure.
FIG. 8 is a cross-sectional view illustrating an area of the display cover structure in the slide-out state of an electronic device according to an embodiment of the disclosure.
FIGS. 9A and 9B are cross-sectional views each illustrating an area of the display cover structure in the slide-out state of an electronic device according to an embodiment of the disclosure.
FIGS. 10A, 10B, and 10C are cross-sectional views each illustrating an area of the display cover structure in the slide-out state of an electronic device according to an embodiment of the disclosure.
FIGS. 11A, 11B, and 11C are cross-sectional views each illustrating an area of the display cover structure in the slide-out state of an electronic device according to an embodiment of the disclosure.
FIGS. 12A and 12B are cross-sectional views each illustrating an area of a display cover structure in a slide-out state of an electronic device, according to an embodiment of the disclosure.
FIG. 13 is a view illustrating how an improvement is achieved in driving resistance of a display cover structure of an electronic device, according to an embodiment of the disclosure.
FIG. 14 is a view illustrating how an improvement is achieved in strength (e.g., pen-drop) of a bending/rolling area of a display cover structure of an electronic device, according to an embodiment of the disclosure.
FIG. 15 is a view illustrating an electronic device according to an embodiment of the disclosure in an unfolded state.
FIG. 16 is a view illustrating the electronic device according to an embodiment of the disclosure in a folded state.
FIG. 17 is a cross-sectional view illustrating an area of a display cover structure in an unfolded state of an electronic device, according to an embodiment of the disclosure.
FIG. 18 is a cross-sectional view illustrating an area of a display cover structure in a folded state of the electronic device, according to an embodiment of the disclosure.
FIG. 19 is a cross-sectional view illustrating an area of a display cover structure in the unfolded state of an electronic device, according to an embodiment of the disclosure.
FIG. 20 is a cross-sectional view illustrating an area of a display cover structure in the unfolded state of an electronic device, according to an embodiment of the disclosure.
FIGS. 21A, 21B, and 21C are cross-sectional views each illustrating an area of a display cover structure in the unfolded state of an electronic device according to an embodiment of the disclosure.
FIGS. 22A and 22B are cross-sectional views each illustrating an area of a display cover structure in the unfolded state of an electronic device according to an embodiment of the disclosure.
FIG. 23 is a cross-sectional view illustrating an area of a display cover structure in the unfolded state of an electronic device, according to an embodiment of the disclosure.

### [Mode for Carrying out the Invention]

The electronic device according to various embodiments of the disclosure may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that embodiments of the present disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C,""at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

According to embodiments, each element (e.g., a module or a program) of the above-described elements may include a single entity or multiple entities, and some of the multiple entities mat be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to embodiments, operations performed by the module, the program, or another element may be carried out sequentially, in parallel, repeatedly, or heuristically, or one or more of the operations may be executed in a different order or omitted, or one or more other operations may be added.

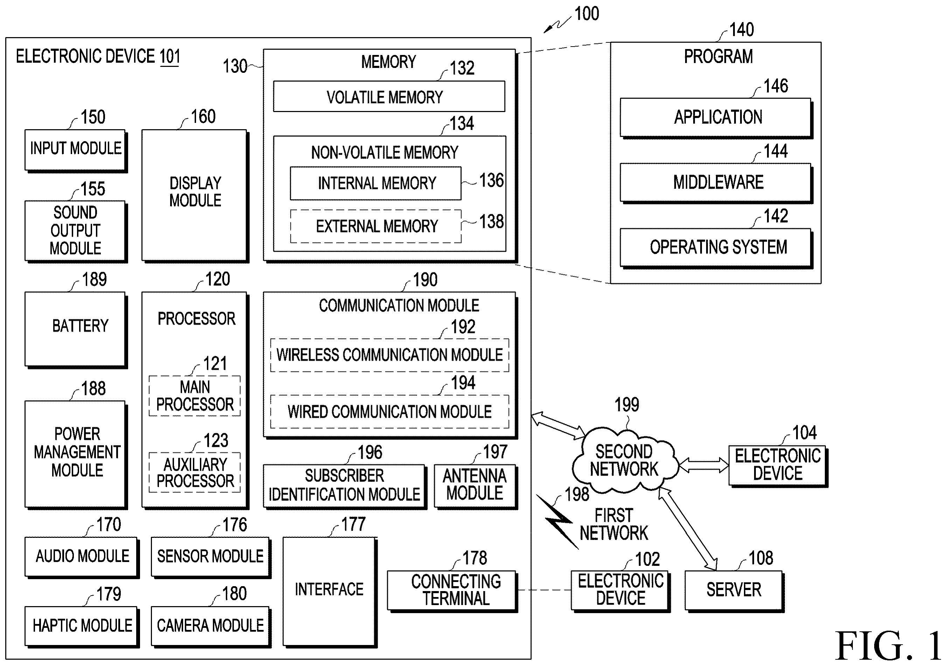

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

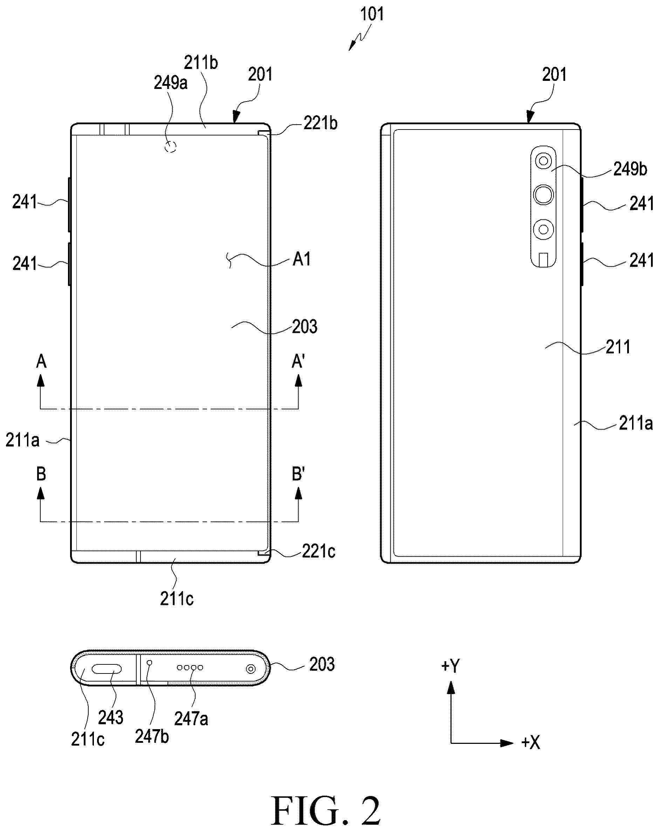

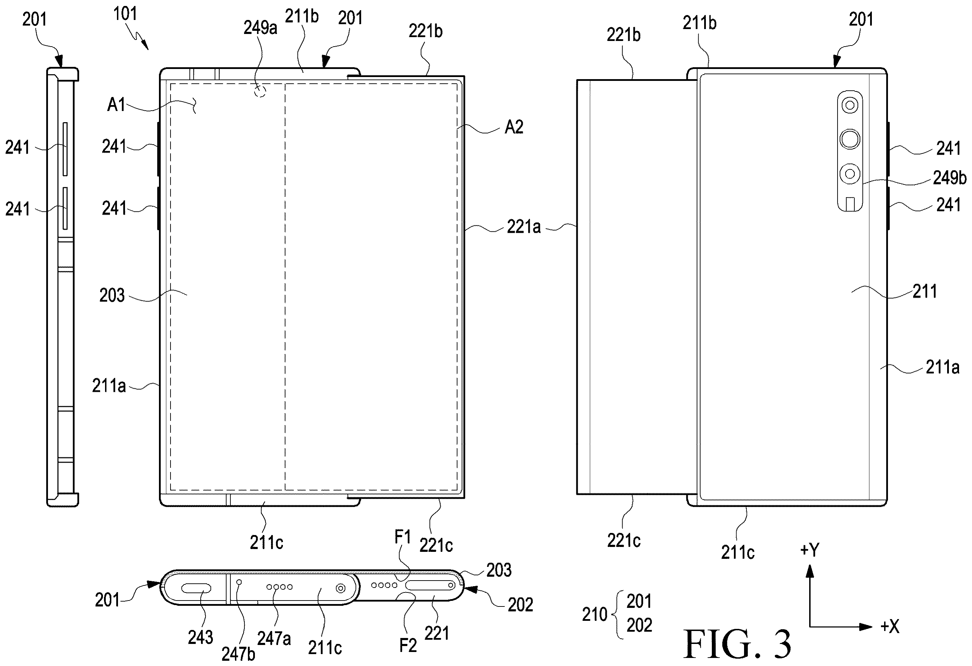

FIG. 2 is a view illustrating a state in which a second display area (e.g., the display area A2 in FIG. 3) of a display is accommodated, according to an embodiment of the disclosure in the housing.

FIG. 3 is a view illustrating a state in which the second display area of the display is visible to the outside of the housing according to an embodiment of the disclosure.

FIGS. 2 and 3 illustrate a structure in which, when viewed from the front of an electronic device 101, a display 203 (e.g., a flexible display or a rollable display) extends in a rightward direction (e.g., the +X-axis direction). However, the extension direction of the display 203 is not limited to a single direction (e.g., the +X-axis direction). For example, the extension direction of the display 203 may be redesigned to be extendable in an upward direction (e.g., the +Y-axis direction), a leftward direction (e.g., a -X-axis direction), and/or a downward direction (e.g., a -Y-axis direction).

The state illustrated in FIG. 2 may be referred to as a slide-in state of the electronic device 101, or a state in which the second display area A2 of the display 203 is closed (e.g., a roll-in state).

The state illustrated in FIG. 3 may be referred to as a slide-out state of the electronic device 101, or a state in which the second display area A2 of the display 203 is opened (e.g., a roll-out state).

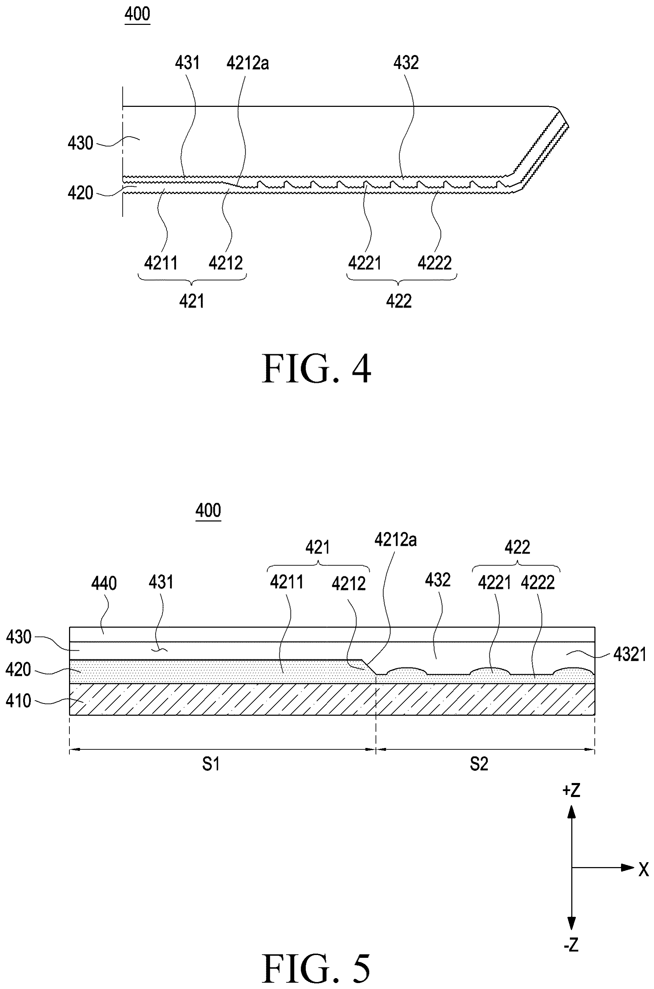

The embodiments of FIGS. 2 and 3 may be combined with the embodiment of FIG. 1 or the embodiments of FIGS. 4 to 23.

Referring to FIGS. 2 and 3 , the electronic device 101 (e.g., the electronic device 101 in FIG. 1) may include a housing 210. The housing 210 may include a first housing 201 and a second housing 202 disposed to be movable relative to the first housing 201. In an embodiment, the electronic device 101 may be interpreted as having a structure in which the first housing 201 is disposed to be slidable relative to the second housing 202. According to an embodiment, the second housing 202 may be disposed to be capable of reciprocating by a predetermined distance in an illustrated direction with respect to the first housing 201, for example, in a direction indicated by the arrow η.

According to an embodiment, the second housing 202 may be referred to as a slide portion or a slide housing and may be movable relative to the first housing 201. According to an embodiment, the second housing 202 may accommodate various electrical and electronic components such as a circuit board and a battery. When the electronic device 101 is in the slide-in state, the second housing 202 may be defined as being in a retracted position, and when the electronic device 101 is in the slide-out state, the second housing 202 may be defined as being in an extended position.

According to an embodiment, the slide-in state of the electronic device 101 (or the slide-out state of the electronic device 101) may be changed into the slide-out state of the electronic device 101 (or the slide-in state of the electronic device 101) based on a defined user input. For example, the slide-in state of the electronic device 101 (or the slide-out state of the electronic device 101) may be changed into the slide-out state (or the slide-in state of the electronic device 101) in response to a user input to a physical button exposed through a portion of the first housing 201 or a portion of the second housing 202. For example, the slide-in state (or the slide-out state of the electronic device 101) may be changed into the slide-out state (or the slide-in state of the electronic device 101) in response to a touch input on an executable object displayed in a screen display area (e.g., the first display area A1). For example, the slide-in state (or the slide-out state of the electronic device 101) may be changed into the slide-out state (or the slide-in state of the electronic device 101) in response to a touch input applied at a contact point on the screen display area (e.g., the first display area A1) and having a pressing intensity greater than a reference intensity. For example, the slide-in state (or the slide-out state of the electronic device 101) may be changed into the slide-out state (or the slide-in state of the electronic device 101) in response to a voice input received through a microphone of the electronic device 101. For example, the slide-in state (or the slide-out state of the electronic device 101) may be changed to the slide-out state (or the slide-in state of the electronic device 101) in response to an external force applied to the first housing 201 and/or the second housing 202 in order to move the second housing 202 relative to the first housing 201. For example, the slide-in state (or the slide-out state of the electronic device 101) may be changed into the slide-out state (or the slide-in state of the electronic device 101) in response to a user input identified by an external electronic device (e.g., earbuds or smartwatch) connected to the electronic device 101. However, the slide-in/out operation of the electronic device 101 is not limited to these.

According to an embodiment, the first housing 201 may accommodate an actuator (e.g., a motor structure), a speaker, a SIM socket, and/or a sub-circuit board (e.g., a second circuit board) electrically connected to a main circuit board (e.g., a first circuit board). The second housing 202 may accommodate a main circuit board on which electrical components such as an application processor (AP) and a communication processor (CP) are mounted. According to an embodiment, the second housing 202 may accommodate an actuator (e.g., a motor structure), a speaker, a SIM socket, and/or a sub-circuit board electrically connected to the main circuit board, and the first housing 201 may accommodate a main circuit board on which electrical components such as an application processor (AP) and a communication processor (CP) are mounted. According to an embodiment, the sub-circuit board and the main circuit board may be disposed in the first housing 201 or may be disposed in the second housing 202.

According to an embodiment, the first housing 201 may include a first plate 211 (or a first plate cover 212 or a main case). The first plate 211 may include a (1-1)^{th} side wall 211a, a (1-2)^{th} side wall 211b extending from the (1-1)^{th} side wall 211a, and a (1-3)^{th} side wall 211c extending from the (1-1)^{th} side wall 211a and being substantially parallel to the (1-2)^{th} side wall 211b. According to an embodiment, the (1-2)^{th} side wall 211b and the (1-3)^{th} side wall 211c may be formed to be substantially perpendicular to the (1-1)^{th} side wall 211a.

According to an embodiment, the (1-1)^{th} side wall 211a, the (1-2)^{th} side wall 211b, and the (1-3)^{th} side wall 211c of the first plate 211 may have a shape that is open on one side (e.g., the front surface) to accommodate (or cover) at least a portion of the second housing 202. For example, at least a portion of the second housing 202 may be surrounded by the first housing 201 and may slide relative to the first housing 201, while being guided by the first housing 201, in a direction parallel to a first surface (e.g., a surface oriented in the +Z-axis direction), for example, in a direction indicated by arrow ①. According to an embodiment, the (1-1)^{th} side wall 211a, the (1-2)^{th} side wall 211b, and/or the (1-3)^{th} side wall 211c of the first plate 211 may be formed integrally. According to an embodiment, the (1-1)^{th} side wall 211a, the (1-2)^{th} side wall 211b, and/or the (1-3)^{th} side wall 211c of the first plate 211 may be formed as separate structures and coupled or assembled.

According to an embodiment, the first plate 211 may be configured to surround at least a portion of the display 203. For example, at least a portion of the display 203 may be formed to be surrounded by the (1-1)^{th} side wall 211a, the (1-2)^{th} side wall 211b, and/or the (1-3)^{th} side wall 211c of the first plate 211.

According to an embodiment, the second housing 202 may include a second slide cover 221 (e.g., a slide plate). The second slide cover 221 may have a plate shape and may include the first surface that supports internal components. For example, the second slide cover 221 may support at least a portion of the display 203 (e.g., the first display area A1). According to an embodiment, the second slide cover 221 may be referred to as a front cover.

According to an embodiment, the second slide cover 221 may include a (2-1)^{th} side wall 221a, a (2-2)^{th} side wall 221b extending from the (2-1)^{th} side wall 221a, and a (2-3)^{th} side wall 221c extending from the (2-1)^{th} side wall 221a and being substantially parallel to the (2-2)^{th} side wall 221b. According to an embodiment, the (2-2)^{th} side wall 221b and the (2-3)^{th} side wall 221c may be substantially perpendicular to the (2-1)^{th} side wall 221a.

According to various embodiments, as the second housing 202 moves in a first direction (e.g., a direction indicated by arrow ①) parallel to the (2-2)^{th} side wall 221b or the (2-3)^{th} side wall 221c, the slide-in state and the slide-out state of the electronic device 101 may be formed. In the slide-in state of the electronic device 101, the second housing 202 may be positioned at a first distance from the (1-1)^{th} side wall 211a of the first housing 201, and in the slide-out state of the electronic device 101, the second housing 202 may be moved to be positioned at a second distance greater than the first distance from the (1-1)^{th} side wall 211a of the first housing 201. In an embodiment, in the slide-in state of the electronic device 101, the first housing 201 may be configured to partially surround the (2-2)^{th} side wall 221b and the (2-3)^{th} side wall 221c.

According to an embodiment, the electronic device 101 may be in an intermediate state between the slide-in state of FIG. 2 (e.g., the fully closed state) and the slide-out state of FIG. 3 (e.g., the fully opened state). The distance between the (1-1)^{th} side wall 211a and the (2-1)^{th} side wall 221a in the intermediate state of the electronic device 101 may be smaller than the distance between the (1-1)^{th} side wall 211a and the (2-1)^{th} side wall 211a of the electronic device 101 in the fully opened state and may be greater than the distance between the (1-1)^{th} side wall 211a and the (2-1)^{th} side wall 221a of the electronic device 101 in the fully closed state. According to an embodiment, as at least a portion of the display 203 slides in the intermediate state of the electronic device 101, the area of the display exposed to the outside may be variable. For example, in the intermediate state of the electronic device 101, the ratio of the width (the length in the X direction) and the height (the length in the Y direction) of the display 203 and/or the distance between the (1-1)^{th} side wall 211a and the (2-1)^{th} side wall 221a may be changed based on the slide movement of the electronic device 101.

According to an embodiment, the electronic device 101 may include a display 203, key input devices 241, a connector hole 243, audio modules 247a and 247b, or camera modules 249a and 249b. According to an embodiment, the electronic device 101 may further include an indicator (e.g., an LED device) or various sensor modules.

According to an embodiment, the display 203 may be configured such that the size of a portion visible from the front side of the housing 210 is changed based on the slide movement of the second housing 202. According to an embodiment, the display 203 may include a first display area A1 and a second display area A2 configured to be exposed to the outside of the electronic device 101 based on the slide movement of the second housing 202.

According to an embodiment, the first display area A1 may be disposed on the second housing 202. For example, the first display area A1 may be disposed on the second slide cover 221 of the second housing 202. According to an embodiment, the second display area A2 extends from the first display area A1, and as the second housing 202 slides relative to the first housing 201, the second display area A2 may be accommodated inside the first housing 201 or visually exposed to the outside of the electronic device 101. According to an embodiment, as the electronic device 101 is changed from the slide-in state to the slide-out state, the display 203 may extend to the right of the electronic device 101 (e.g., in the +X direction). For example, in the slide-out state of the electronic device 101, the second display area A2 may be visually exposed on the left side of the display 203 (e.g., in the -X-axis direction). According to an embodiment, as the electronic device 101 changes from the slide-in state into the slide-out state, the display 203 may extend to the left of the electronic device 101 (e.g., in the -X-axis direction). For example, in the slide-out state of the electronic device 101, the second display area A2 may be visually exposed on the right of the display 203 (e.g., in the +X-axis direction).

According to an embodiment, the second display area A2 may move while being substantially guided by an area of the first housing 201, and may be accommodated into a space located inside the first housing 201 (e.g., a roll-in state) or may be visible to the outside of the electronic device 101 (e.g., a roll-out state). According to an embodiment, the second display area A2 may move based on slide movement of the second housing 202 in a first direction (e.g., a direction indicated by arrow η). For example, while the second housing 202 slides, a portion of the second display area A2 may be deformed into a curved shape at a position corresponding to a curved surface of the first housing 201.

According to an embodiment, when viewed from above the second slide cover 221 (e.g., a front cover), as the electronic device 101 changes from the slide-in state into the slide-out state (e.g., as the second housing 202 slides to extend relative to the first housing 201), the second display area A2 may be gradually exposed to the outside (e.g., become visible) and may form a substantially planar surface together with the first display area A1. According to an embodiment, the display 203 may be coupled to or arranged adjacent to a touch-sensing circuit, a pressure sensor configured to measure touch intensity (pressure), and/or a digitizer configured to detect a magnetic field-type stylus pen. According to an embodiment, regardless of whether the electronic device 101 is in the slide-in state or the slide-out state, a portion of the exposed second display area A2 may be positioned on a portion of the second housing, and a portion of the second display area A2 may maintain a curved shape at a position corresponding to the curved surface 213a.

According to an embodiment, the key input device 241 may be positioned in an area of the housing 210 (e.g., the first housing 201 and/or the second housing 202). The electronic device 101 may be designed such that the illustrated key input devices 241 are omitted or additional key input devices are included depending on the external appearance and use state. According to an embodiment, the electronic device 101 may include key input devices (not illustrated), such as a home key button or touch pads arranged around the home key button. According to an embodiment, at least some of the key input devices 241 may be disposed on the (1-1)^{th} side wall 211a, the (1-2)^{th} side wall 211b, and/or the (1-3)^{th} side wall 211c of the first housing 201. According to an embodiment, at least some of the key input devices 241 may be disposed on the (2-1)^{th} side wall 221a, the (2-2)^{th} side wall 221b, and/or the (2-3)^{th} side wall 221c of the second housing 202.

According to an embodiment, the connector hole 243 may be omitted in some embodiments and may accommodate a connector (e.g., a USB connector) for transmitting/receiving power and/or data to/from an external electronic device. According to an embodiment (not illustrated), the electronic device 101 may include a plurality of connector holes 243, and some of the connector holes 243 may function as connector holes for transmitting/receiving audio signals to/from an external electronic device. In the illustrated embodiment, the connector hole 243 is positioned in the second housing 202, but is not limited to thereto. The connector hole 243 or a connector hole (not illustrated) may be positioned in the first housing 201.

According to an embodiment, the audio modules 247a and 247b may include one or more speaker holes 247a or one or more microphone holes 247b. One of the speaker holes 247a may be provided as a receiver hole for a voice call, and another one may be provided as an external speaker hole. The electronic device 101 may include a microphone configured to acquire sound, and the microphone may acquire sound outside the electronic device 101 through the microphone holes 247b. According to an embodiment, the electronic device 101 may include a plurality of microphones to detect the direction of sound. According to an embodiment, the electronic device 101 may include an audio module in which the speaker holes 247a and the microphone holes 247b are implemented as a single hole, or a speaker in which the speaker holes 247a are excluded (e.g., a piezo speaker). According to an embodiment, the speaker hole 247a and the microphone hole 247b may be positioned in the first housing 201 and/or the second housing 202.

According to an embodiment, the camera modules 249a and 249b may include a first camera module 249a (e.g., a front camera) and a second camera module 249b (e.g., a rear camera). According to an embodiment, the electronic device 101 may include at least one of a wide-angle camera, a telephoto camera, or a close-up camera. In some embodiments, the electronic device 101 may include an infrared projector and/or an infrared receiver to measure the distance to a subject. The camera modules 249a and 249b may include one or more lenses, an image sensor, and/or an image signal processor. The first camera module 249a may be arranged to be oriented in the same direction as the display 203. For example, the first camera module 249a may be arranged around the first display area A1 or in an area overlapping the display 203, and may capture an image of a subject through the display 203 when arranged in the area overlapping the display 203. According to an embodiment, the first camera module 249a may include an under-display camera (UDC) which may be hidden without being visually exposed to a screen display area (e.g., the first display area A1). According to an embodiment, the second camera module 249b may capture an image of a subject in a direction opposite to the first display area A1. According to an embodiment, the first camera module 249a and/or the second camera module 249b may be disposed on the second housing 202. According to an embodiment, a plurality of second camera module 249b may be provided to provide various arrangements. For example, a plurality of second camera modules 249b may be arranged along a width direction (a Y-axis direction), which is substantially perpendicular to the slide movement direction of the electronic device 101 (e.g., the X-axis direction). According to an embodiment, the plurality of second camera modules 249b may be arranged along the slide movement direction of the electronic device 101 (e.g., the X-axis direction). According to an embodiment, the plurality of second camera modules 249b may be arranged along rows and columns in an N × M matrix form.

According to an embodiment, when the electronic device 101 is in the slide-in state, the second camera module 249b may not be visually exposed to the outside of the electronic device 101, and when the electronic device 101 is in the slide-out state, the second camera module 249b may capture an image of a scene outside the electronic device 101. According to an embodiment, the second camera module 249b may capture an image of a scene outside the electronic device 101 when the electronic device 101 is in the slide-in state and/or the slide-out state. For example, at least a portion of the housing 210 (e.g., a rear surface plate of the housing) may be substantially transparent, and the second camera module 249b may capture an image of a scene outside the electronic device 101 through the rear surface plate of the housing. According to an embodiment, when the electronic device 101 is in the slide-in state and/or the slide-out state, the second camera module 249b may be visually exposed to the outside of the electronic device 101 and capture a scene outside the electronic device 101. For example, the first housing 201 may include an opening for the second camera module 249b.

According to an embodiment, an indicator (not illustrated) of the electronic device 101 may be disposed on the first housing 201 or the second housing 202, and may include a light-emitting diode to provide state information of the electronic device 101 as a visual signal. A sensor module (not illustrated) of the electronic device 101 may generate an electrical signal or a data value corresponding to an internal operating status of the electronic device 101 or an external environmental status. The sensor module may include a proximity sensor, a fingerprint sensor, and/or a biometric sensor (e.g., an iris/face recognition sensor or an HRM sensor). In an embodiment, the sensor module may further include at least one of a gesture sensor, a gyro sensor, a barometric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module may be disposed in the first housing 201 and/or the second housing 202.

FIG. 4 is a perspective view illustrating an area of a display cover structure of an electronic device according to an embodiment of the disclosure.

FIG. 5 is a cross-sectional view illustrating an area of the display cover structure in the slide-out state of the electronic device according to an embodiment of the disclosure.

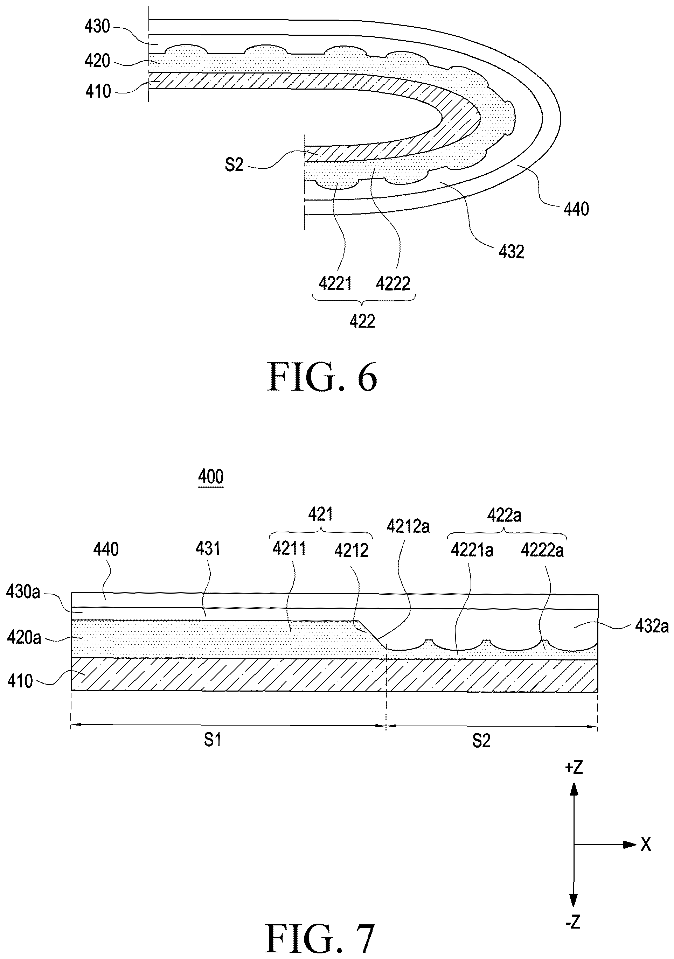

FIG. 6 is a cross-sectional view illustrating an area of the display cover structure in the slide-in state of the electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

According to an embodiment, as the second housing 202 (and the flexible display 203 connected to the second housing 202) slides in and out relative to the first housing 201, the electronic device may be in a closed state or an opened state.

According to an embodiment, the display cover structure 400 may have a flexible structure corresponding to the slide-in and slide-out operation of the flexible display 203. For example, when the electronic device performs a slide-in or slide-out operation, at least a portion of the display cover structure 400 may change from an area forming a planar surface into an area forming bending (or rolling), or from an area forming bending (or rolling) to an area forming a planar surface.

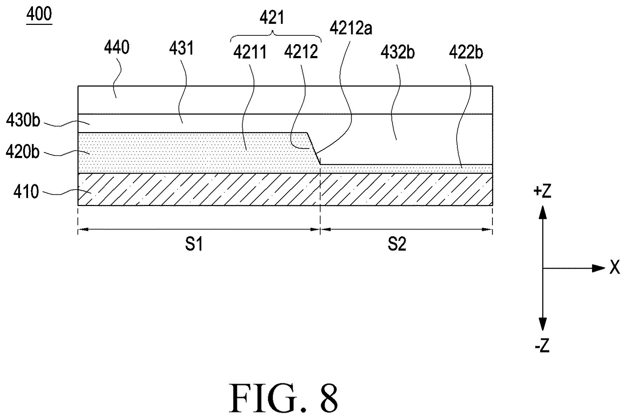

The configurations of the display cover structure 400 of FIGS. 5, 6, and 7 may be partially or entirely the same as the configuration of the display 203 of FIGS. 2 and 3. The embodiments of FIGS. 5, 6, and 7 may be partially combined with the embodiments of FIGS. 1 to 4 or the embodiments of FIGS. 8 to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420 disposed on the thin glass 410, and a coating layer 430 disposed on the molding layer 420.

According to an embodiment, the display cover structure 400 may include thin glass 410, a molding layer 420 disposed on the thin glass 410, a coating layer 430 disposed on the molding layer 420, and a protective layer 440 disposed on the coating layer 430.

According to an embodiment, the thin glass 410 may include a first area S1 and a second area S2 extending from the first area S1 and corresponding to a bending or rolling area of a flexible display. For example, a flexible display (e.g., the display 203 of FIGS. 2 and 3) may include a first display area (e.g., the first display area A1 of FIGS. 2 and 3) and a second display area (e.g., the second display area A2 of FIGS. 2 and 3) extending from the first display area A1, and the second display area may be configured to be rolled in or rolled out based on sliding movement of a second housing (e.g., the second housing 202 of FIGS. 2 and 3). The first area S1 of the thin glass 410 may be a portion of, or a structure corresponding to, the first display area A1, and the second area S2 of the thin glass 410 may be a portion of, or a structure corresponding to, the second display area A2. For example, when the flexible display 203 is defined as being limited to a flexible display panel, the first area S1 of the thin glass 410 may be disposed on the first display area A1, and the second area S2 of the thin glass 410 may be disposed on the second display area A2.

According to an embodiment, the thin glass 410 may include a first area S1 and a second area S2, and the first area S1 and the second area S2 may entirely form a uniform thickness (e.g., an identical thickness). In general, when a glass layer is manufactured through a physical machining process (e.g., CNC, etching, or polishing) such that certain areas have a different thickness, wrinkles or shape deformation may occur around certain machined areas, or cracks may occur due to weakened strength. According to an embodiment, the thin glass 410 may provide an entirely uniform thickness (e.g., an identical thickness) by excluding the above-described physical processing, thereby reducing or limiting occurrence of defects in certain areas. The cover structure 400 may provide a variable structure (e.g., a first pattern portion 421 and a second pattern portion 422) in the molding layer 420 disposed on the thin glass 410 in order to correspond to bending or rolling of the flexible display 203.

According to an embodiment, the thickness of the thin glass 410 may be about 25% to about 35% of the thickness of the cover structure 400 (e.g., a laminated structure of the thin glass 410, the molding layer 420, and the coating layer 430). For example, when the cover structure 400 (e.g., the laminated structure of the thin glass 410, the molding layer 420, and the coating layer 430) has a thickness of about 90 µm to about 100 µm, the thin glass 410 may have a thickness of about 22.5 µm to about 35 µm. For example, the thin glass 410 may have a thickness of about 25 µm to about 30 µm. According to an embodiment, the thin glass 410 may have a higher hardness compared to other layers of the cover structure 400 (e.g., the molding layer 420 or the coating layer 430). For example, the hardness of the thin glass 410 may have a value of about 7 to about 9.

According to an embodiment, the molding layer 420 may be disposed on the thin glass 410. The molding layer 420 may include a first pattern part 421 disposed on the first area S1 of the thin glass 410, and a second pattern part 422 disposed on the second area S2 of the thin glass 410. The second pattern part 422 of the molding layer 420 may correspond to a bending or rolling area of the flexible display. For example, the second pattern part 422 may be a portion of, or a structure corresponding to, a second display area (e.g., the second display area A2 of FIGS. 2 and 3) of the flexible display.

According to an embodiment, the molding layer 420 may have a structure in which a pattern varies along a length direction (e.g., the X-axis direction). The first pattern part 421 and the second pattern part 422 of the molding layer 420 may have different shapes. For example, a first thickness of the first pattern part 421 and a second thickness of the second pattern part 422 may be different from each other. The first thickness of the first pattern part 421 may be an average thickness of one or more shapes forming the first pattern part 421. The second thickness of the second pattern part 422 may be an average thickness of one or more shapes forming the second pattern part 422.

According to an embodiment, the first pattern part 421 of the molding layer 420 may form a single layer. The first thickness of the first pattern part 421 may have an entirely uniform thickness (e.g., an identical thickness). Since the first pattern part 421 is a portion of, or a structure corresponding to, a flat area (e.g., the first display area A1 of FIGS. 2 and 3) of the flexible display 203, the first pattern part 421 may maintain a flat surface without bending or rolling.

According to an embodiment, the first pattern part 421 of the molding layer 420 may form a variable layer. The first pattern part 421 may form an inclined surface 4212a in a partial section so as to extend to the second pattern part 422 having a different thickness. For example, the first pattern part 421 may include a first section 4211 having a first thickness, and a second section 4212 extending from the first section 4211 toward the second pattern part 422, the second section 4212 having a thickness equal to or less than the first thickness and varying (e.g., gradually decreasing) along a length direction (e.g., the X-axis direction). For example, as the inclined surface 4212a forms an angle of about 1 degree to about 10 degrees, a variable layer (e.g., a boundary line) of the first pattern part 421 toward the second pattern part 422 may be substantially invisible when viewed from the outside.

According to an embodiment, the second pattern part 422 of the molding layer 420 may include a protrusion structure. The second pattern part 422 of the molding layer 420 may include an array of a plurality of protruding portions 4221. The plurality of protruding portions 4221 may include shapes protruding in the +Z-axis direction. The second pattern part 422 may be a portion of, or a structure corresponding to, a bending or rolling area of a flexible display (e.g., the second display area A2 of FIGS. 2 and 3), and may be formed in a pattern advantageous for the bending or rolling. The plurality of protruding portions 4221 of the second pattern part 422 may reduce a driving resistance and/or a restoring force during the bending or rolling, thereby reducing or limiting twisting and deformation of a structure laminated with the thin glass 410 and the coating layer 430.

According to an embodiment, the plurality of protruding portions 4221 of the second pattern part 422 may be disposed to be spaced apart from each other. For example, referring to FIG. 5, the plurality of protruding portions 4221 may have shapes including curved surfaces and may be disposed to be spaced apart from each other by a predetermined distance. The second pattern part 422 may include a connecting portion 4222 having a predetermined thickness and connecting adjacent protruding portions 4221 to each other. The maximum thickness (e.g., the height) of the plurality of protruding portions 4221 may be greater than that of the connecting portion 4222 connecting the plurality of protruding portions 4221.

According to an embodiment, the plurality of protruding portions 4221 of the second pattern part 422 may be disposed without being spaced apart from each other. For example, the plurality of protruding portions 4221 may have shapes including curved surfaces, and adjacent protruding portions 4221 may be continuously arranged from end portions of the protruding portions 4221.

According to an embodiment, the plurality of protruding portions 4221 of the second pattern part 422 may be an array of shapes protruding toward the coating layer 430. For example, each of the plurality of protruding portions 4221 may include a curved surface. Each of the plurality of protruding portions 4221 may have various shapes such as a convex lens-shaped pattern, an uneven pattern, or a curved column pattern. Each of the plurality of protruding portions 4221 may have a shape convex in the +Z-axis direction or a shape convex in the -Z-axis direction (e.g., a recess pattern). For example, each of the plurality of protruding portions 4221 may have a shape such as a quadrangular shape, a polygonal shape, or a trapezoidal shape without including a curved surface. However, the shapes of the plurality of protruding portions 4221 are not limited to the above-described embodiments, and design modifications may be made to various patterned shapes capable of alleviating a driving resistance without causing deformation such as twisting during bending and/or rolling of the flexible display.

According to an embodiment, the first pattern part 421 and the second pattern part 422 of the molding layer 420 may have different thicknesses. The first pattern part 421 (e.g., the first section 4211 forming the single layer) may have a first thickness, and the second pattern part 422 may have a second thickness smaller than the first thickness. For example, the second thickness of the second pattern part 422 may be about 20% to about 50% of the first thickness of the first pattern part 421 (e.g., the first section 4211 forming the single layer), thereby achieving an improvement in a restoring force and a driving resistance of the cover structure 400 relative to bending and/or rolling of the flexible display.

According to an embodiment, the first pattern part 421 and the second pattern part 422 of the molding layer 420 may have different thicknesses based on a type (e.g., a thickness) of the thin glass 410. For example, when the thickness of the thin glass 410 is about 25% to about 35% of the thickness of the cover structure 400 (e.g., a structure in which the thin glass 410, the molding layer 420, and the coating layer 430 are laminated), the thickness of the molding layer 420 may be formed to be about 20% to about 40% of the thickness of the cover structure 400. For example, when the thin glass 410 has a thickness of about 30 µm, the molding layer 420 may have a thickness of about 20 µm to about 40 µm. For example, the thickness of the first pattern part 421 of the molding layer 420 may be about 40 µm, and the second pattern part 422 of the molding layer 420 may range from about 20 µm to about 30 µm (e.g., the protruding portions 4221). A width of each of the protruding portions 4221 and/or a spacing between adjacent protruding portions 4221 may range from about 0.3 mm to about 0.5 mm.

According to an embodiment, the molding layer 420 may have a higher hardness than other layers (e.g., the coating layer 430) of the cover structure 400. For example, the hardness of the molding layer 420 may be about 3 to about 4. Since the hardness of the coating layer 430 is about 0, the laminated structure of the molding layer 420 and the coating layer 430 may improve the overall strength of the cover structure 400. According to an embodiment, the molding layer 420 may be formed to have a refractive index (e.g., about 1.5 or more) that is the same as or similar to that of the thin glass 410, thereby improving visibility of the cover structure 400.

According to an embodiment, the molding layer 420 may form pattern parts (e.g., a first pattern part 421 and a second pattern part 422) through an ultra-violet (UV) molding technique. The molding layer 420 may be a transparent layer and may include a polymer layer. According to an embodiment, the cover structure 400 may be implemented by placing a liquid-state molding layer 420 into a ultra-violet (UV) molding mold, disposing a thin glass 410 on the molding layer 420, and curing the molding layer 420 by at least one of UV light and heat. As the UV molding mold includes at least one pattern, the thickness of the molding layer 420 may be freely adjusted using the UV molding mold, and surface treatment may be performed only on desired areas on the surface of the molding layer 420. For example, the UV molding mold may include at least one pattern in a portion contacting the surface of the molding layer 420 so that the molding layer 420 has a variable thickness through the UV molding mold. In addition, to ensure that a plurality of protruding portions 4221 are generated in required areas on the surface of the molding layer 420, the UV molding mold may include, in a portion contacting the required areas, an engraved pattern (e.g., a recess pattern) for at least the protruding portions 4221.

According to an embodiment, the coating layer 430 may be disposed on the molding layer 420. The coating layer 430 may include a first coating portion 431 corresponding to the first pattern part 421 of the molding layer 420 and a second coating portion 432 corresponding to the second pattern part 422 of the molding layer 420. A portion of the coating layer 430 (e.g., the first coating portion 431) may have a structure in which a pattern varies along the length direction (e.g., the X-axis direction).

According to an embodiment, the coating layer 430 may be filled to have an identical height from the thin glass 410. According to an embodiment, the coating layer 430 may have a substantially uniform thickness over an entirety thereof, defined as a distance from the thin glass 410 to an upper surface of the coating layer 430. For example, as the first thickness of the first pattern part 421 of the molding layer 420 and the second thickness of the second pattern part 422 of the molding layer 420 are different from each other, the first coating portion 431 and the second coating portion 432 of the coating layer 430 may also have different thicknesses. The thickness of the first coating portion 431 may be an average thickness of one or more shapes forming the first coating portion 431. The thickness of the second coating portion 432 may be an average thickness of one or more shapes forming the second coating portion 432. For example, when the sum of the thickness of the coating layer 430 and the thickness of the molding layer 420 is defined as a predetermined value L, the thickness of the first coating portion 431 may be "L - the first thickness of the first pattern part 421," and the thickness of the second coating portion 432 may be "L - the second thickness of the second pattern part 422." As the first thickness of the first pattern part 421 is configured to be greater than the second thickness of the second pattern part 422, the thickness of the first coating portion 431 may be smaller than the thickness of the second coating portion 432. For example, when the sum of the thicknesses of the coating layer 430 and the molding layer 420 is about 60 µm, the first thickness of the first pattern part 421 is about 40 µm, and the second thickness of the second pattern part 422 is about 20 µm, the thickness of the first coating portion 431 may be about 20 µm, and the thickness of the second coating portion 432 may be about 40 µm.

According to an embodiment, the first coating portion 431 of the coating layer 430 may form a variable layer. The first coating portion 431 may form an inclined surface in a partial section so as to extend toward the second coating portion 432 having a different thickness. The inclined surface of the first coating portion 431 may correspond to the inclined surface 4212a of the first pattern part 421. For example, the inclined surface of the first coating portion 431 may form an angle of about 1 degree to about 10 degrees.

According to an embodiment, the second coating portion 432 of the coating layer 430 may include a recess structure. The second coating portion 432 of the coating layer 430 may include an array of a plurality of recess portions 4321. The plurality of recess portions 4321 of the second coating portion 432 may be filling areas arranged to cover the protruding portions 4221 of the second pattern part 422, and may have inverted shapes corresponding to the protruding portions 4221 of the second pattern part 422. The shapes of the plurality of recess portions 4321 of the second coating portion 432 may be variously designed to correspond to various shapes of the second pattern part 422. Together with the plurality of protruding portions 4221 of the second pattern part 422, the plurality of recess portions 4321 of the second coating portion 432 may reduce a driving resistance and/or a restoring force during bending or rolling of the flexible display, thereby reducing or limiting twisting and deformation of the laminated structure forming the cover structure 400.

According to an embodiment, the coating layer 430 may have a lower hardness compared to other layers of the cover structure 400 (e.g., the thin glass 410 and the molding layer 420). For example, the hardness of the molding layer 420 may be about 3 to about 4. Since the hardness of the coating layer 430 is about 0, the laminated structure of the molding layer 420 and the coating layer 430 may improve the overall strength of the cover structure 400. According to an embodiment, the coating layer 430 may be formed to have a refractive index that is the same as or similar to that of the thin glass 410 (and/or the molding layer 420), thereby improving the visibility of the cover structure 400.

According to an embodiment, the coating layer 430 may be a film layer formed of a transparent polymer. The coating layer 430 may include an OCR filling material. The OCR filling material may have the same refractive index as the thin glass 410 (or the molding layer 420) (e.g., a refractive index of 1.5 or more), and may be a mixture including one or more of acrylic, silicone, or urethane coating solutions. The coating layer 430 may include an adhesive component. For example, the coating layer 430 may include at least one of an optical clear adhesive (OCA), a pressure sensitive adhesive (PSA), a thermally reactive adhesive, a general adhesive, or a double-sided tape.

According to an embodiment, the display cover structure 400 may include the thin glass 410, the molding layer 420 disposed on the thin glass 410, and the coating layer 430 disposed on the molding layer 420, and may further include a protective layer 440 disposed on the coating layer 430.

According to an embodiment, the protective layer 440 may be disposed on the coating layer 430. The protective layer 440 may form a single layer. The protective layer 440 may be manufactured as a layer disposed on a flat upper surface of the coating layer 430 and having an overall uniform thickness (e.g., an identical thickness).

According to an embodiment, the protective layer 440 may include one or more layers, and may be a layer for surface pressing resistance, scratch resistance, slip properties, anti-fingerprint performance, or the like. For example, the protective layer 440 may include at least one of an anti-fouling layer or anti-fingerprint layer (AF layer), a hard coating layer (HC layer), an anti-reflection layer (AR layer) or a low reflection layer (LR layer), or an anti-glare layer (AG layer).

FIG. 7 is a cross-sectional view illustrating an area of the display cover structure in the slide-out state of an electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

The configurations of a thin glass 410, a molding layer 420a, a coating layer 430a, and/or a protective layer 440 of the display cover structure 400 of FIG. 7 may be partially or entirely the same as the configurations of the thin glass 410, the molding layer 420, the coating layer 430, and/or the protective layer 440 of the display cover structure 400 of FIGS. 4, 5, and 6. The embodiments of FIG. 7 may be combined in part with the embodiments of FIGS. 1 to 6 or the embodiments of FIGS. 8 to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420a disposed on the thin glass 410, and a coating layer 430a disposed on the molding layer 420a.

According to an embodiment, the thin glass 410 may include a first area S1 and a second area S2 extending from the first area S1 and corresponding to a bending or rolling area of a flexible display.

According to an embodiment, the molding layer 420a may be disposed on the thin glass 410. The molding layer 420a may include a first pattern part 421 disposed on the first area S1 of the thin glass 410, and a second pattern part 422a disposed on the second area S2 of the thin glass 410. The second pattern part 422a of the molding layer 420a may correspond to a bending or rolling area of the flexible display. For example, the second pattern part 422a may be a portion of, or a structure corresponding to, a second display area (e.g., the second display area A2 of FIGS. 2 and 3) of the flexible display.

According to an embodiment, the first pattern part 421 of the molding layer 420a may include a first section 4211 having a uniform thickness (e.g., an identical thickness) and a second section 4212 extending from the first section 4211 and having a variable thickness. For example, the first pattern part 421 may form, in a partial section (e.g., the second section 4212), an inclined surface 4212a so as to extend to the second pattern part 422 having a different thickness.

According to an embodiment, the second pattern part 422a of the molding layer 420a may include a recess structure. The second pattern part 422a of the molding layer 420a may include an array of a plurality of recess portions 4221a. The plurality of recess portions 4221a may have concave shapes when viewed from above the molding layer 420a (e.g., when viewed in a -Z-axis direction). The second pattern part 422a may be a portion of, or a structure corresponding to, a bending or rolling area of a flexible display (e.g., the second display area A2 of FIGS. 2 and 3), and may be formed in a pattern advantageous for the bending or rolling. The plurality of recess portions 4221a of the second pattern part 422a may reduce a driving resistance and/or a restoring force during the bending or rolling, thereby reducing or limiting twisting and deformation of a structure laminated with the thin glass 410 and the coating layer 430a.

According to an embodiment, the plurality of recess portions 4221a of the second pattern part 422a may be arranged to be spaced apart from each other. The plurality of recess portions 4221a may have shapes including curved surfaces and may be arranged to be spaced apart from each other by a predetermined distance. The second pattern part 422a may include the recess portions 4221a and a connecting portion 4222a having a predetermined thickness and connecting adjacent recess portions 4221a to each other.

According to an embodiment, the plurality of recess portions 4221a of the second pattern part 422a may be arranged without being spaced apart from each other. For example, the plurality of recess portions 4221a may have shapes including curved surfaces, and adjacent recess portions 4221a may be continuously arranged from end portions of the recess portions 4221a.

According to an embodiment, the first pattern part 421 and the second pattern part 422a of the molding layer 420a may have different thicknesses. The first pattern part 421 may have a first thickness, and the second pattern part 422a may have a second thickness smaller than the first thickness. For example, the second thickness of the second pattern part 422a may be about 20% to about 50% of the first thickness of the first pattern part 421, and an improvement may be achieved in restoring force and driving resistance of the cover structure 400 relative to bending and/or rolling of the flexible display.

According to an embodiment, the coating layer 430a may be disposed on the molding layer 420a. The coating layer 430a may include a first coating portion 431 corresponding to the first pattern part 421 of the molding layer 420a, and a second coating portion 432a corresponding to the second pattern part 422a of the molding layer 420a. A portion of the coating layer 430a (e.g., the first coating portion 431) may form a structure in which a pattern varies along a length direction (e.g., the X-axis direction). The second coating portion 432a may include a plurality of protruding portions, and the plurality of protruding portions may be filling areas arranged to cover the recess portions 4221a of the second pattern part 422a and may have inverted shapes corresponding to the recess portions 4221a of the second pattern part 422a.

According to an embodiment, the coating layer 430a may be filled to have an identical height from the thin glass 410. According to an embodiment, the coating layer 430a may have an overall uniform thickness defined as a distance from the thin glass 410 to an upper surface of the coating layer 430a. For example, as the first thickness of the first pattern part 421 of the molding layer 420a and the second thickness of the second pattern part 422a are different from each other, the first coating portion 431 and the second coating portion 432a of the coating layer 430a may also have different thicknesses.

According to an embodiment, the display cover structure 400 may include the thin glass 410, the molding layer 420a disposed on the thin glass 410, and the coating layer 430a disposed on the molding layer 420a, and may further include a protective layer 440 disposed on the coating layer 430a.

FIG. 8 is a cross-sectional view illustrating an area of the display cover structure in the slide-out state of an electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is visually exposed to the outside to protect the flexible display panel.

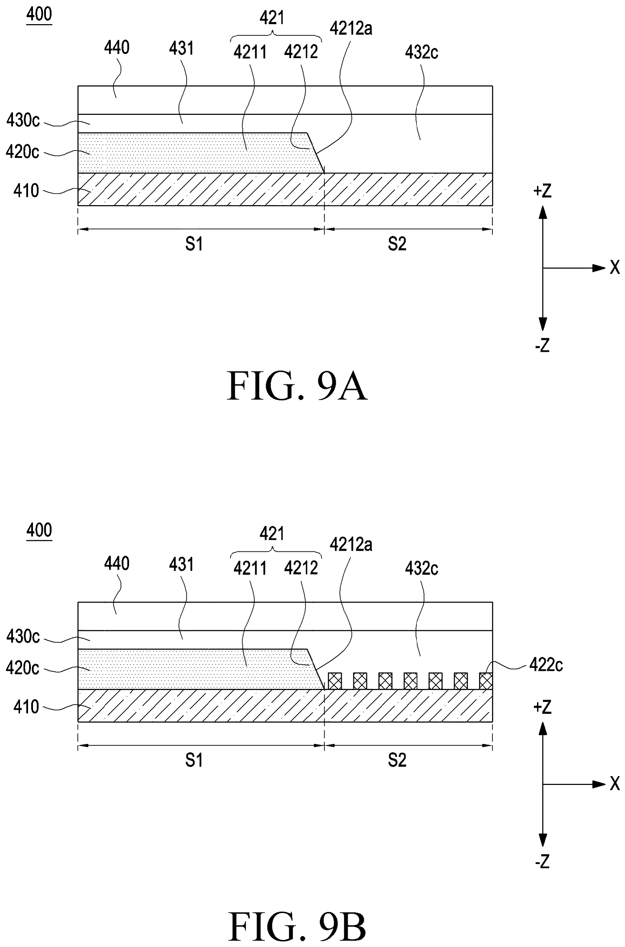

The configurations of a thin glass 410, a molding layer 420b, a coating layer 430b, and/or a protective layer 440 of the display cover structure 400 of FIG. 8 may be partially or entirely the same as the configurations of the thin glass 410, the molding layer 420, the coating layer 430, and/or the protective layer 440 of the display cover structure 400 of FIGS. 4, 5, and 6. The embodiments of FIG. 8 may be combined in part with the embodiments of FIGS. 1 to 7 or the embodiments of FIGS. 9A to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420b disposed on the thin glass 410, and a coating layer 430b disposed on the molding layer 420b.

According to an embodiment, the thin glass 410 may include a first area S1 and a second area S2 extending from the first area S1 and corresponding to a bending or rolling area of a flexible display.

According to an embodiment, the molding layer 420b may be disposed on the thin glass 410. The molding layer 420b may include a first pattern part 421 disposed on the first area S1 of the thin glass 410, and a second pattern part 422b disposed on the second area S2 of the thin glass 410. The second pattern part 422b of the molding layer 420b may correspond to a bending or rolling area of the flexible display. For example, the second pattern part 422b may be a portion of, or a structure corresponding to, a second display area (e.g., the second display area A2 of FIGS. 2 and 3) of the flexible display.

According to an embodiment, the molding layer 420b may have a structure in which a pattern varies along a length direction (e.g., the X-axis direction). The first pattern part 421 and the second pattern part 422b of the molding layer 420 may have different shapes. For example, the thickness of the first pattern part 421 and the thickness of the second pattern part 422b may be different from each other. The first thickness of the first pattern part 421 may be an average thickness of one or more shapes forming the first pattern part 421. The second thickness of the second pattern part 422b may be an average thickness of one or more shapes forming the second pattern part 422b.

According to an embodiment, the first pattern part 421 of the molding layer 420b may include a first section 4211 having a uniform thickness (e.g., an identical thickness) and a second section 4212 extending from the first section 4211 and having a variable thickness. For example, the first pattern part 421 may form, in a partial section (e.g., the second section 4212), an inclined surface 4212a so as to extend to the second pattern part 422b having a different thickness.

According to an embodiment, the first pattern part 421 and the second pattern part 422b of the molding layer 420b may have different thicknesses. The first section 4211 of the first pattern part 421 may have a first thickness, and the second pattern part 422b may have a second thickness smaller than the first thickness. For example, the second thickness of the second pattern part 422b may be about 20% to about 50% of the first thickness of the first section 4211 of the first pattern part 421, and an improvement may be achieved in restoring force and driving resistance of the cover structure 400 relative to bending and/or rolling of the flexible display.

According to an embodiment, the coating layer 430b may be disposed on the molding layer 420b. The coating layer 430b may include a first coating portion 431 corresponding to the first pattern part 421 of the molding layer 420b, and a second coating portion 432b corresponding to the second pattern part 422b of the molding layer 420b. A portion of the coating layer 430b (e.g., the first coating portion 431) may form a structure in which a pattern varies along a length direction (e.g., the X-axis direction).

According to an embodiment, the coating layer 430b may be filled to have an identical height from the thin glass 410. According to an embodiment, the coating layer 430b may have an overall uniform thickness defined as a distance from the thin glass 410 to an upper surface of the coating layer 430b. For example, the thickness of the first coating portion 431 of the coating layer 430b may be smaller than the thickness of the second coating portion 432b.

According to an embodiment, the display cover structure 400 may include the thin glass 410, the molding layer 420b disposed on the thin glass 410, and the coating layer 430b disposed on the molding layer 420b, and may further include a protective layer 440 disposed on the coating layer 430b.

FIGS. 9A and 9B are cross-sectional views each illustrating an area of the display cover structure in the slide-out state of an electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

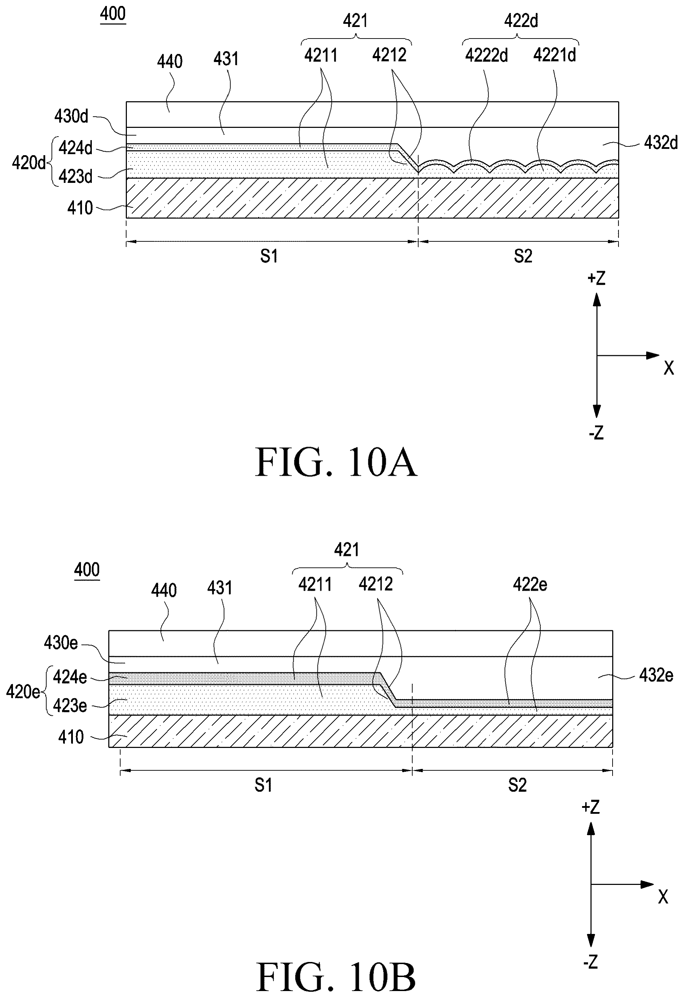

The configurations of a thin glass 410, a molding layer 420c, a coating layer 430c, and/or a protective layer 440 of the display cover structure 400 of FIGS. 9A and 9B may be partially or entirely the same as the configurations of the thin glass 410, the molding layer 420, the coating layer 430, and/or the protective layer 440 of the display cover structure 400 of FIGS. 4, 5, and 6. The embodiments of FIGS. 9A and 9B may be combined in part with the embodiments of FIGS. 1 to 8 or the embodiments of FIGS. 10a to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420c disposed on the thin glass 410, and a coating layer 430c disposed on the molding layer 420c.

According to an embodiment, the thin glass 410 may include a first area S1 and a second area S2 extending from the first area S1 and corresponding to a bending or rolling area of a flexible display.

According to an embodiment, the molding layer 420c may be disposed on the thin glass 410. Referring to FIG. 9A, the molding layer 420c may include a first pattern part 421 disposed on the first area S1 of the thin glass 410. The molding layer 420c may not be disposed on the second area S2 of the thin glass 410. Referring to FIG. 9B, the molding layer 420c may include a first pattern part 421 disposed on the first area S1 of the thin glass 410 and a second pattern part 422c disposed on the second area S2 of the thin glass 410.

According to an embodiment, the molding layer 420c may have a structure in which a pattern varies along a length direction (e.g., the X-axis direction). The first pattern part 421 of the molding layer 420c may include a first section 4211 having a uniform thickness (e.g., an identical thickness) and a second section 4212 extending from the first section 4211 and having a variable thickness. For example, the first pattern part 421 may form an inclined surface 4212a in a partial section (e.g., the second section 4212) so as to extend up to an area before the second area S2 of the thin glass 410 on which the molding layer 420c is not disposed.

According to an embodiment referring to FIG. 9A, the molding layer 420c may be disposed on the first area S1 of the thin glass 410, and only the coating layer 430c (e.g., a second coating portion 432c) may be disposed on the second area S2 of the thin glass 410. As the coating layer 430c, which has a low hardness and flexibility, is positioned in a bending and/or rolling section of the flexible display, an improvement may be achieved in restoring force and driving resistance of the cover structure 400.

According to an embodiment referring to FIG. 9B, the second pattern part 422c of the molding layer 420c may include a protrusion structure. The second pattern part 422c of the molding layer 420c may include an array of a plurality of protruding portions. The plurality of protruding portions may include shapes protruding in the +Z-axis direction. The plurality of protruding portions may reduce a driving resistance and/or a restoring force during the bending or rolling, thereby reducing or limiting twisting and deformation of a structure laminated with the thin glass 410 and the coating layer 430c. The plurality of protruding portions of the second pattern part 422c of the molding layer 420c may be disposed to be spaced apart from each other. Since the molding layer 420c is not disposed in spaces between the plurality of protruding portions that are spaced apart from each other, the coating layer 430c and the thin glass 410 may be in contact with each other. According to an embodiment referring to FIG. 9A, the coating layer 430c may be disposed from an upper surface of the molding layer 420c to an upper surface (e.g., a surface oriented in the +Z-axis direction) of the second area S2 of the thin glass 410. The coating layer 430c may include a first coating portion 431 corresponding to the first pattern part 421 of the molding layer 420c and a second coating portion 432c corresponding to the second area S2 of the thin glass 410. A portion of the coating layer 430c (e.g., the first coating portion 431c) may form a structure in which a pattern varies along a length direction (e.g., the X-axis direction).

According to an embodiment, the coating layer 430c may be filled to have an identical height from the thin glass 410. According to an embodiment, the coating layer 430c may have an overall uniform thickness defined as a distance from the thin glass 410 to an upper surface of the coating layer 430c. For example, the thickness of the first coating portion 431 of the coating layer 430c may be smaller than the thickness of the second coating portion 432c. The thickness (e.g., the height) of the second coating portion 432c of the coating layer 430c may be the sum of the thickness of the first coating portion 431 and the thickness of the first pattern part 421 (e.g., the first section 4211) of the molding layer 420c.

According to an embodiment referring to FIG. 9B, the coating layer 430c may be disposed on a portion of the thin glass 410 and on the molding layer 420c. The coating layer 430c may be disposed to cover the molding layer 420c, and may be disposed on the thin glass 410 in which the molding layer 420c is not disposed (e.g., certain areas of the second pattern part 422c). The coating layer 430c may be filled to have an identical height from the thin glass 410. According to an embodiment, the coating layer 430c may have an overall uniform thickness defined as a distance from the thin glass 410 to an upper surface of the coating layer 430c.

According to an embodiment, the display cover structure 400 may include the thin glass 410, the molding layer 420c disposed on the thin glass 410, and the coating layer 430c disposed on the molding layer 420c, and may further include a protective layer 440 disposed on the coating layer 430c.

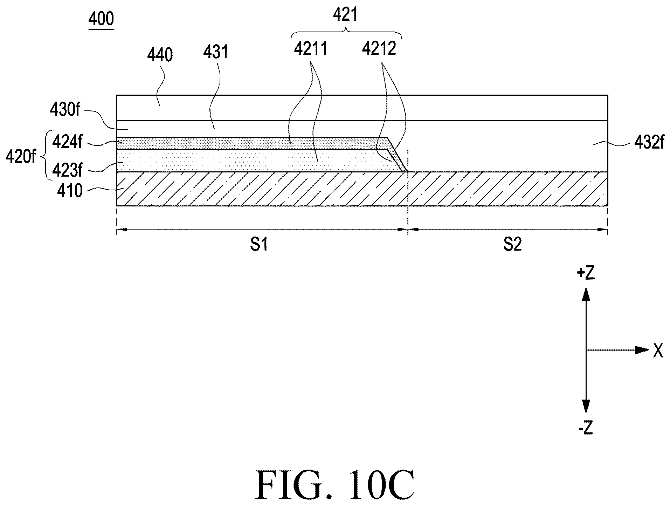

FIGS. 10A, 10B, and 10C are cross-sectional views each illustrating an area of the display cover structure in the slide-out state of an electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

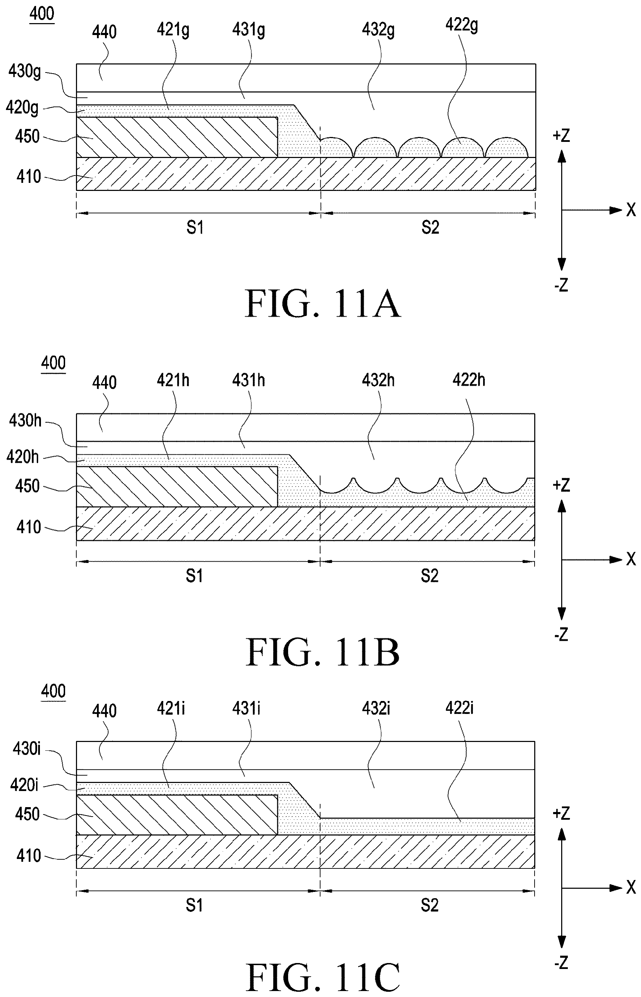

The configurations of a thin glass 410, a molding layer 420d, 420e, or 420f, a coating layer 430d, 430e, or 430f, and/or a protective layer 440 of the display cover structure 400 of FIGS. 10A, 10B, and 10C may be partially or entirely the same as the configurations of the thin glass 410, the molding layer 420, the coating layer 430, and/or the protective layer 440 of the display cover structure 400 of FIGS. 4 to 9A. The embodiments of FIGS. 10A, 10B, and 10C may be combined in part with the embodiments of FIGS. 1 to 9A or the embodiments of FIGS. 11A to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420d, 420e, or 420f disposed on the thin glass 410, and a coating layer 430d, 430e, or 430f disposed on the molding layer 420d, 420e, or 420f.

According to an embodiment, the molding layer 420d, 420e, or 420f may include a plurality of molding layers having different hardness values from each other. For example, the molding layer 420d, 420e, or 420f may include a laminated structure of a first molding layer 423d, 423e, or 423f having a first hardness and a second molding layer 424d, 424e, or 424f having a second hardness lower than the first hardness. The hardness of the first molding layer 423d, 423e, or 423f and the second molding layer 424d, 424e, or 424f may have a value between the hardness of the thin glass 410 and the hardness of the coating layer 430. The cover structure 400 of FIG. 10A may substantially follow the cover structure 400 of FIG. 5, the cover structure 400 of FIG. 10B may substantially follow the cover structure 400 of FIG. 8, and the cover structure 400 of FIG. 10C may substantially follow the cover structure 400 of FIG. 9A.

According to an embodiment, the thin glass 410 may include a first area S1 and a second area S2 extending from the first area S1 and corresponding to a bending or rolling area of a flexible display.

Hereinafter, according to an embodiment referring to FIGS. 10A and 10B, the molding layer 420d or 420e may be disposed on the thin glass 410. The molding layer 420d or 420e may include a first pattern part 421 disposed on the first area S1 of the thin glass 410, and a second pattern part 422d or 422e disposed on the second area S2 of the thin glass 410. The second pattern part 422d or 422e of the molding layer 420d or 420e may correspond to a bending or rolling area of the flexible display. For example, the second pattern part 422d or 422e may be a portion of, or a structure corresponding to, a second display area (e.g., the second display area A2 of FIGS. 2 and 3) of the flexible display.

According to an embodiment, the first pattern part 421 and the second pattern part 422d or 422e may each have a laminated structure of two layers (e.g., a first molding layer 423d or 423e and a second molding layer 424d or 424e). The first molding layer 423d or 423e and the second molding layer 424d or 424e forming the first pattern part 421 may each include a first section 4211 having a uniform thickness (e.g., an identical thickness) and a second section 4212 extending from the first section 4211 and having a variable thickness. The first molding layer 423d or 423e may be a high-hardness layer having a hardness value of about 3 to about 4.5, and the second molding layer 424d or 424e may be a medium-hardness layer having a hardness value of about 1 to about 3. According to embodiments of the disclosure, by stacking molding layers having a plurality of different hardness values, the strength of the cover structure 400 may be improved.

Referring to FIG. 10A, the laminated configurations of the first molding layer 423d and the second molding layer 424d may each include a second pattern part 422d. The second pattern part 422d may include a protrusion structure. The second pattern part 422d of the first molding layer 423d may include an array of a plurality of protruding portions 4221d. The second pattern part 422d of the second molding layer 424d may include an array of a plurality of protruding portions 4222d. The plurality of protruding portions 4221d and 4222d may include shapes protruding in the +Z-axis direction. The second pattern part 422d may be a portion of, or a structure corresponding to, a bending or rolling area of a flexible display (e.g., the second display area A2 of FIGS. 2 and 3), and may be formed in a pattern advantageous for the bending or rolling. The plurality of protruding portions 4221d and 4222d of the second pattern part 422d may reduce a driving resistance and/or a restoring force during the bending or rolling, thereby reducing or limiting twisting and deformation of a structure laminated with the thin glass 410 and the coating layer 430d.

According to an embodiment, the first molding layer 423d forming the second pattern part 422d may have a lens-shaped pattern protruding toward the coating layer 430d, or an uneven pattern, and the second molding layer 424d may be a layer laminated on the first molding layer 423d and formed to have an overall uniform thickness (e.g., an identical thickness). When viewed from above the second pattern part 422d of the molding layer 420d (e.g., when viewed in the -Z-axis direction), the second molding layer 424d may be disposed to entirely cover the first molding layer 423d, such that only the second molding layer 424d is visually recognized as having a protruding shape.

Referring to FIG. 10B, the laminated configurations of the first molding layer 423e and the second molding layer 424e may each include a second pattern part 422e. According to an embodiment, the second pattern part 422e of the first molding layer 423e may form a single layer having a uniform (e.g., the same) first thickness, and the second pattern part 422e of the second molding layer 424e may be laminated on the second pattern part 422e of the first molding layer 423e and form a single layer having a uniform (e.g., the same) second thickness. The first thickness and the second thickness may be different from each other or may be the same. When viewed from above the second pattern part 422e of the molding layer 420e (e.g., when viewed in the -Z-axis direction), the second molding layer 424e may be disposed to entirely cover the first molding layer 423e, and the second molding layer 424e may appear to have a flat shape.

Hereinafter, according to an embodiment referring to FIG. 10C, the molding layer 420f may be disposed on the thin glass 410. The molding layer 420f may include a first pattern part 421 disposed on a first area S1 of the thin glass 410. The molding layer 420f may not be disposed on the second area S2 of the thin glass 410.

According to an embodiment, the molding layer 420f may have a structure in which a pattern varies along a length direction (e.g., the X-axis direction). The first pattern part 421 of the molding layer 420f may include a first section 4211 having a uniform thickness (e.g., an identical thickness) and a second section 4212 extending from the first section 4211 and having a variable thickness. For example, the first pattern part 421 may form an inclined surface in a partial section (e.g., the second section 4212) so as to extend up to an area before the second area S2 of the thin glass 410 on which the molding layer 420f is not disposed.

According to an embodiment, the first pattern part 421 may have a laminated structure of two layers (e.g., a first molding layer 423f and a second molding layer 424f). The first molding layer 423f and the second molding layer 424f forming the first pattern part 421 may each include a first section 4211 having a uniform thickness (e.g., an identical thickness) and a second section 4212 extending from the first section 4211 and having a variable thickness. The first molding layer 423f may be a high-hardness layer having a hardness value of about 3.5 to about 4.5, and the second molding layer 424f may be a medium-hardness layer having a hardness value of about 2.5 to about 3.5. According to embodiments of the disclosure, by stacking molding layers having a plurality of different hardness values, the strength of the cover structure 400 may be improved.

According to an embodiment, the molding layer 420f may be disposed on the first area S1 of the thin glass 410, and only the coating layer 430f may be disposed on the second area S2 of the thin glass 410. As the coating layer 430f, which has a low hardness and flexibility, is positioned in a bending and/or rolling section of the flexible display, an improvement may be achieved in restoring force and driving resistance of the cover structure 400.

According to an embodiment referring to FIGS. 10A, 10B, and 10C, a coating layer 430d, 430e, or 430f may be filled to have an identical height from the thin glass 410. For example, the thickness of the first coating portion 431 of the coating layer 430d, 430e, or 430f may be smaller than the thickness of the second coating portion 432d, 432e, or 432f.

According to an embodiment, the display cover structure 400 may include the thin glass 410, the molding layer 420d, 420e, or 420f disposed on the thin glass 410, the coating layer 430d, 430e, or 430f disposed on the molding layer 420d, 420e, or 420f, and may further include a protective layer 440 disposed on the coating layer 430d, 430e, or 430f.

FIGS. 11A, 11B, and 11C are cross-sectional views each illustrating an area of the display cover structure in the slide-out state of an electronic device according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

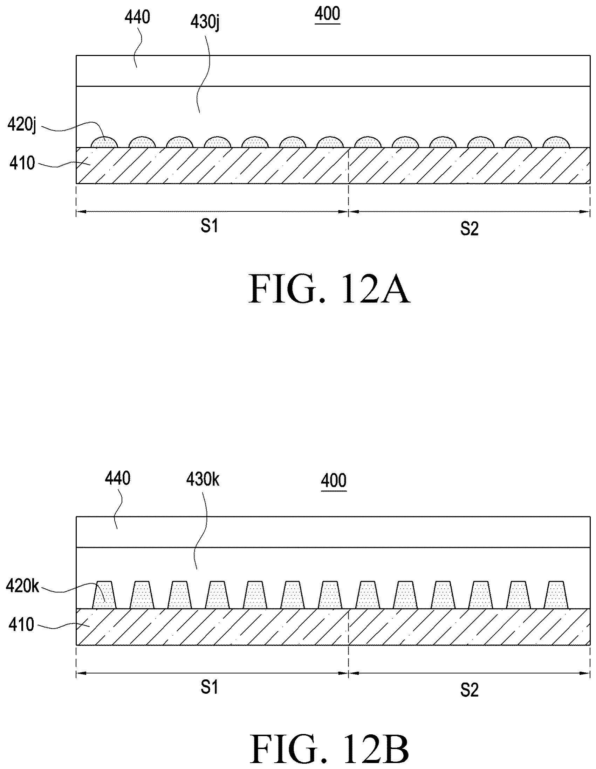

The configurations of a thin glass 410, a molding layer 420g, 420h, or 420i, the coating layer 430g, 430h, or 430i, and/or a protective layer 440 of the display cover structure 400 of FIGS. 11A, 11B, and 11C may be partially or entirely the same as the configurations of the thin glass 410, the molding layer 420, the coating layer 430, and/or the protective layer 440 of the display cover structure 400 of FIGS. 4 to 10C. The embodiments of FIGS. 11A, 11B, and 11C may be combined in part with the embodiments of FIGS. 1 to 10C or the embodiments of FIGS. 12A to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420g, 420h, or 420i disposed on the thin glass 410, and a coating layer 430g, 430h, or 430i disposed on the molding layer 420g, 420h, or 420i.

According to an embodiment, a bonding glass layer 450 may be laminated on certain areas of the thin glass 410. The glass forming the cover structure 400 may include the thin glass 410 and a bonding glass layer 450 that is thicker than the thin glass 410. For example, by disposing the bonding glass layer 450 having a second thickness greater than a first thickness on a first area S1 of the thin glass 410 having the first thickness, the strength of an overall glass structure may be improved by increasing the overall thickness of the glass. The cover structure 400 of FIG. 11A may substantially follow the cover structure 400 of FIG. 5, the cover structure 400 of FIG. 11B may substantially follow the cover structure 400 of FIG. 7, and the cover structure 400 of FIG. 11C may substantially follow the cover structure 400 of FIG. 8.

According to an embodiment, the thin glass 410 may include a first area S1 and a second area S2 extending from the first area S1 and corresponding to a bending or rolling area of a flexible display.

According to an embodiment, the bonding glass layer 450 may be disposed on the thin glass 410. The bonding glass layer 450 may be disposed on the first area S1 of the thin glass 410. The bonding glass layer 450 may not be disposed on the second area S2 of the thin glass 410. The second area S2 of the thin glass 410 may be a portion of, or a structure corresponding to, a bending or rolling area (e.g., the second display area A2) of the flexible display.

According to an embodiment, molding layer 420g, 420h, or 420i may be disposed on the thin glass 410. The molding layer 420g, 420h, or 420i may include a first pattern part 421g, 421h, or 421i disposed on the bonding glass layer 450 (e.g., the bonding glass layer 450 laminated with the first area S1 of the thin glass 410), and a second pattern part 422g, 422h, or 422i disposed on the second area S2 of the thin glass 410. A portion of the bonding glass layer 450 (e.g., an upper surface or a side surface) may be arranged to be surrounded by the first pattern part 421g, 421h, or 421i of the molding layer 420g, 420h, or 420i.

According to an embodiment, the second pattern part 422g, 422h, or 422i of the molding layer 420g, 420h, or 420i may correspond to a bending or rolling area of the flexible display. For example, the second pattern part 422g, 422h, or 422i may be a portion of, or a structure corresponding to, a second display area of a flexible display (e.g., the second display area A2 of FIGS. 2 and 3). A portion (e.g., a variable section or a second section) of the first pattern part 421g, 421h, or 421i may be disposed on the first area S1 of the thin glass 410.

According to an embodiment, a coating layer 430g, 430h, or 430i may be disposed on the molding layer 420g, 420h, or 420i. The coating layer 430g, 430h, or 430i may include a first coating portion 431g, 431h, or 431i corresponding to the first pattern part 421g, 421h, or 421i of the molding layer 420g, 420h, or 420i, and a second coating portion 432g, 432h, or 432i corresponding to the second pattern part 422g, 422h, or 422i of the molding layer 420g, 420h, or 420i. A portion of the coating layer 430g, 430h, or 430i (e.g., the first coating portion 431g, 431h, or 431i) may form a structure in which a pattern varies along a length direction thereof (e.g., the X-axis direction).

According to an embodiment, the coating layer 430g, 430h, or 430i may be filled to have an identical height from the thin glass 410. According to an embodiment, the coating layer 430g, 430h, or 430i may have an overall uniform thickness such that a distance from the thin glass 410 to an upper surface of the coating layer 430g, 430h, or 430i is uniform. For example, the thickness of the first coating portion 431g, 431h, or 431i of the coating layer 430g, 430h, or 430i may be smaller than the thickness of the second coating portion 432g, 432h, or 432i.

According to an embodiment, the display cover structure 400 may include the thin glass 410, the molding layer 420g, 420h, or 420i disposed on the thin glass 410, and the coating layer 430g, 430h, or 430i disposed on the molding layer 420g, 420h, or 420i, and may further include a protective layer 440 disposed on the coating layer 430g, 430h, or 430i.

FIGS. 12A and 12B are cross-sectional views each illustrating an area of a display cover structure in a slide-out state of an electronic device, according to an embodiment of the disclosure.

According to an embodiment, an electronic device (e.g., the electronic device 101 of FIGS. 2 and 3) may include a first housing (e.g., the first housing 201 of FIGS. 2 and 3), a second housing (e.g., the second housing 202 of FIGS. 2 and 3), and a flexible display (e.g., the display 203 of FIGS. 2 and 3). The flexible display may include a flexible display panel and a display cover structure 400 formed such that at least a portion thereof is exposed to the outside to protect the flexible display panel.

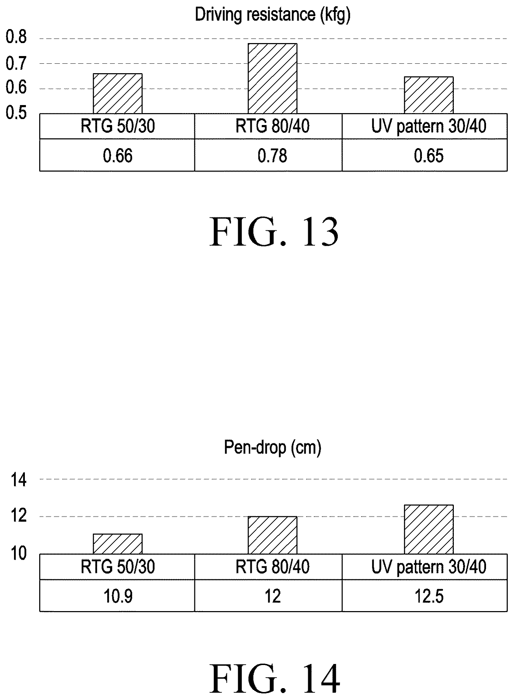

The configurations of a thin glass 410, a molding layer 420j or 420k, a coating layer 430j or 430k, and/or a protective layer 440 of the display cover structure 400 of FIGS. 12A and 12B may be partially or entirely the same as the configurations of the thin glass 410, the molding layer 420, the coating layer 430, and/or the protective layer 440 of the display cover structure 400 of FIGS. 4 to 11C. The embodiments of FIGS. 12A and 12B may be combined in part with the embodiments of FIGS. 1 to 11C or the embodiments of FIGS. 13 to 23.

According to an embodiment, the display cover structure 400 of an electronic device (e.g., the electronic device 101 of FIGS. 2 and 3) may be referred to as a window cover or a cover structure. The display cover structure 400 may include a thin glass 410, a molding layer 420j or 420k disposed on the thin glass 410, and a coating layer 430j or 430k disposed on the molding layer 420j or 420k.

According to an embodiment, the thin glass 410 may include a first area S1 and a second area S2 extending from the first area S1 and corresponding to a bending or rolling area of a flexible display.

According to an embodiment, the molding layer 420j or 420k may be disposed on the thin glass 410. The molding layer 420j or 420k may include a pattern part disposed on the first area S1 and the second area S2 of the thin glass 410.

According to an embodiment, a pattern part of the molding layer 420j or 420k may include a protrusion structure. The pattern part of the molding layer 420j or 420k may include an array of a plurality of protruding portions. The plurality of protruding portions may include shapes protruding in the +Z-axis direction. A portion of the pattern part of the molding layer 420j or 420k may be a portion of, or a structure corresponding to, a bending or rolling area (e.g., the second display area A2 of FIGS. 2 and 3) of the flexible display and may be formed in a pattern advantageous for the bending or rolling. The plurality of protruding portions disposed in the second area S2 of the thin glass 410 may reduce a driving resistance and/or a restoring force during the bending or rolling, thereby reducing or limiting twisting and deformation of a structure laminated with the thin glass 410 and the coating layer 430.

According to an embodiment, the plurality of protruding portions of the pattern part of the molding layer 420j or 420k may be spaced apart from one another. The plurality of protruding portions 4221 may be an array of shapes protruding toward the coating layer 430. Referring to FIG. 12A, each of the plurality of protruding portions may include a curved surface. Each of the plurality of protruding portions may have various shapes such as a convex lens-shaped pattern, an uneven pattern, or a curved-column pattern. Each of the plurality of protruding portions may have a shape convex in the +Z-axis direction, or may have a shape convex in the -Z-axis direction (e.g., a recess pattern). Referring to FIG. 12B, each of the plurality of protruding portions may have a shape such as a quadrilateral shape, a polygonal shape, or a trapezoidal shape. However, the shapes of the plurality of protruding portions are not limited to the above-described embodiments, and design modifications may be made to various patterned shapes capable of alleviating a driving resistance without causing deformation such as twisting during bending and/or rolling of the flexible display.

According to an embodiment, a coating layer 430j or 430k may be disposed on the thin glass 410 and the molding layer 420. The coating layer 430j or 430k may be arranged so as to cover the molding layer 420j or 420k and may be disposed on the thin glass 410 on which the molding layer 420j or 420k is not disposed. The coating layer 430j or 430k may be filled to have an identical height from the thin glass 410. According to an embodiment, the coating layer 430j or 430k may have an overall uniform thickness such that a distance from the thin glass 410 to an upper surface of the coating layer 430j or 430k is uniform. For example, as thicknesses of protruding portions formed in the pattern part of the molding layer 420j or 420k vary, the coating layer 430j or 430k may be variably formed in a shape corresponding thereto.

According to an embodiment, the display cover structure 400 may include the thin glass 410, the molding layer 420j or 420k disposed on the thin glass 410, and the coating layer 430j or 430k disposed on the molding layer 420j or 420k, and may further include a protective layer 440 disposed on the coating layer 430j or 430k.

FIG. 13 is a view illustrating how an improvement is achieved in driving resistance of a display cover structure of an electronic device, according to an embodiment of the disclosure.

FIG. 14 is a view illustrating how an improvement is achieved in strength (e.g., pen-drop) of a bending/rolling area of a display cover structure of an electronic device, according to an embodiment of the disclosure.

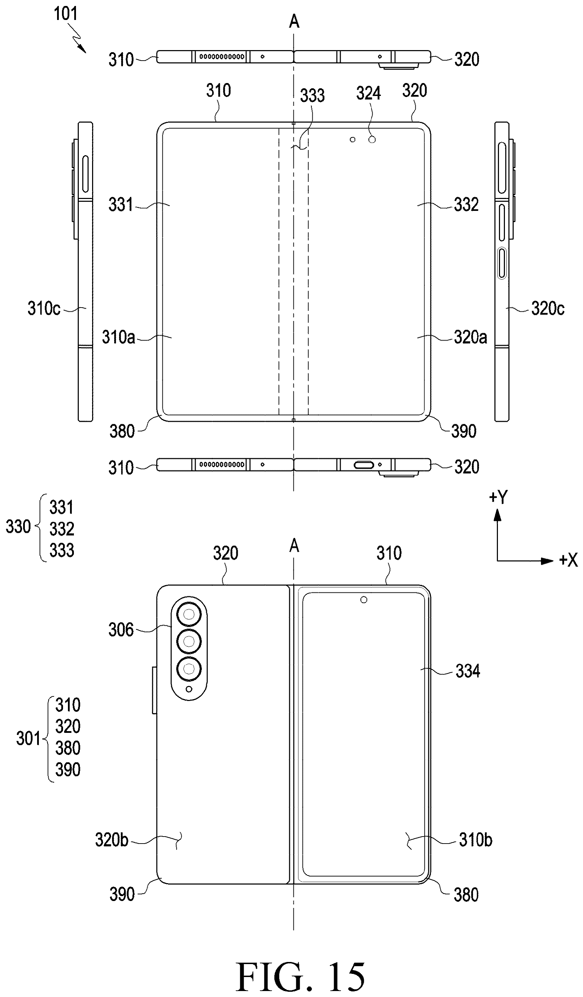

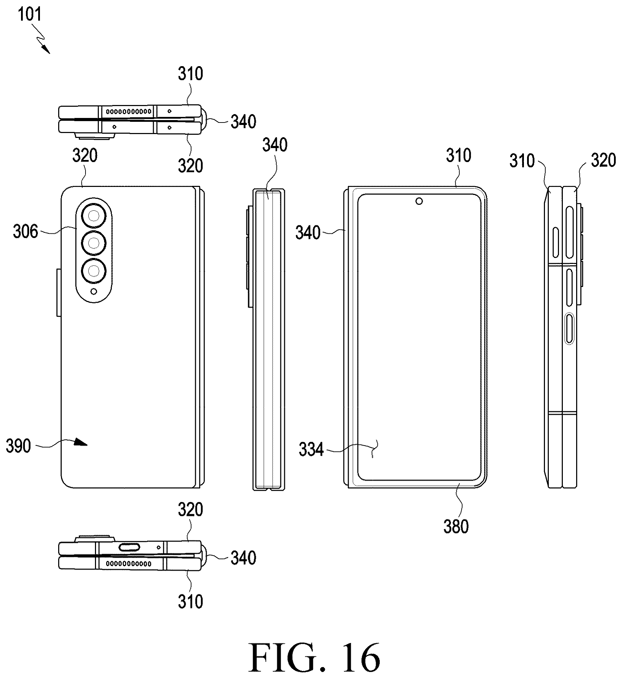

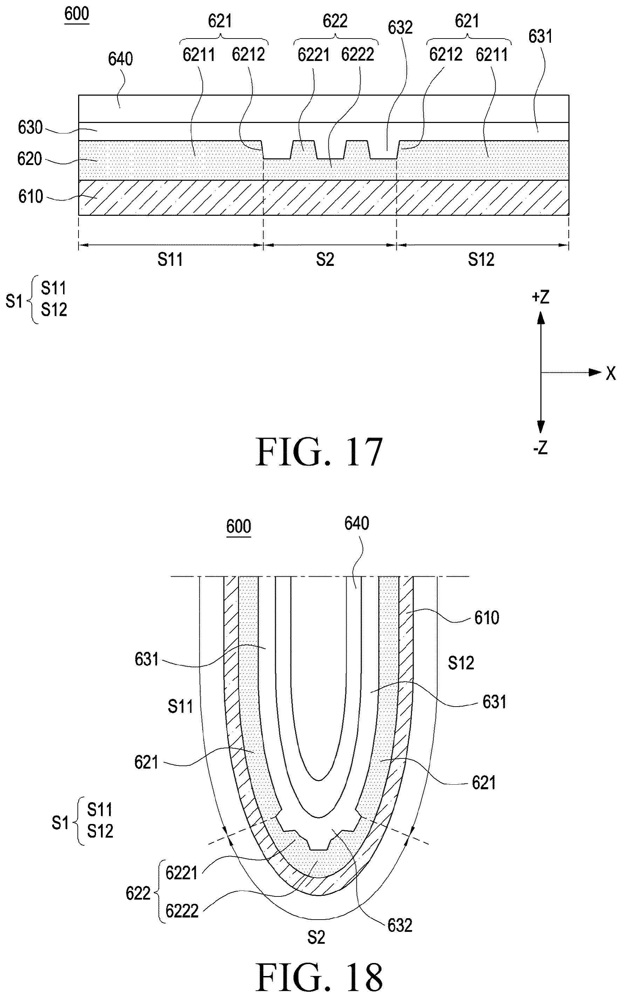

According to an embodiment, an electronic device (e.g., the electronic device 101 of FIGS. 2, 3, 15, and 16) may include a first housing (e.g., the first housing 201 of FIGS. 2 and 3, or the first housing 310 of FIGS. 15 and 16), a second housing (e.g., the second housing 202 of FIGS. 2 and 3, or the second housing 320 of FIGS. 15 and 16), and a flexible display (e.g., the display 203 of FIGS. 2 and 3, or the display 330 of FIGS. 15 and 16). The flexible display may include a display cover structure (e.g., the cover structure 400 of FIGS. 4 to 12, or the cover structure 600 of FIGS. 17 to 23) that is formed such that at least a portion thereof is exposed to the outside in order to protect a flexible display panel.

FIGS. 13 and 14 illustrate experimental data values obtained by measuring driving resistances and strengths of bending (or rolling) areas of the display cover structures (e.g., the cover structures 400 of FIGS. 4 to 12, or the cover structures 600 of FIGS. 17 to 23).

According to the embodiments, the cover structure may be provided as a coating layer covering a molding layer in which various patterned shapes (e.g., protruding portions) are formed, so as to alleviate a driving resistance caused by bending or rolling of the flexible display.

Referring to Table 1 below and FIG. 13, values measured for driving resistances of the cover structures according to three experimental examples may be identified.

The term "driving resistance" may be defined as a force (e.g., a resistance force (or restoring force)) that resists (or reacts against) driving (e.g., bending or rolling) of the flexible display. Reducing the driving resistance as much as possible may be more advantageous for driving of the flexible display, and this may be based on patterns, thicknesses, hardnesses, and the like of respective layers forming a cover structure.

The three experimental examples represent values measured for driving resistances of thin glass (e.g., RTG) and molding layers (e.g., UV patterns). "RTG (50/30)" indicates that the maximum and minimum thicknesses of the bending or rolling area of a thin glass are configured to 50/30 (µm), and it can be identified that the driving resistance is about 0.66 (kgf). "RTG (80/40)" indicates that the maximum and minimum thicknesses of the bending or rolling area of a thin glass are configured to 80/40 (µm), and it can be identified that the driving resistance is about 0.78 (kgf). "UV pattern (30/40)" indicates that the minimum and maximum pattern thicknesses of the bending or rolling area of a UV molding layer are configured to 30/40 (µm), and it can be identified that the driving resistance is about 0.65 (kgf).

In general, when a glass (e.g., the RTG (50/30) and RTG (80/40) examples) is manufactured through a physical machining process (e.g., CNC, etching, or polishing) such that certain areas have a different thickness, wrinkles or shape changes may occur around certain machined areas, or cracks may occur due to weakened strength. According to the embodiments of the present disclosure (e.g., the UV pattern (30/40) example, e.g., the embodiments of FIGS. 4 to 6), it can be identified that an improvement is achieved in driving resistance as compared with the ordinarily processed glass structures, and a required thickness (e.g., a pattern thickness) for the UV molding layer is also relatively small.

**[Table 1]**

| Items | RTG(50/30) | RTG(80/40) | UV pattern (30/40) |
|---|---|---|---|
| Driving resistance | 0.66 | 0.78 | 0.65 |
| (kgf) | | | |
| Pen-drop (cm) (flat area/rolling area) | 10.8/10.9 | 18.3/12 | 15.5/12.5 |

According to Table 1 and FIG. 14, values measured for strength (e.g., pen-drop) of the cover structures according to three experimental examples can be identified.

The term "pen-drop" may be defined as a value of a height at which breakage occurs when a pen (e.g., a ball-point pen having a diameter of 0.3 mm or 0.7 mm) is dropped from a predetermined height onto a portion of an area (e.g., a flat area or a rolling area) of a flexible display.

The three experimental examples indicate values measured for pen-drop with respect to thin glass (e.g., RTG) and a UV molding layer. "RTG (50/30)" indicates that maximum and minimum thicknesses of a bending or rolling area of a thin glass are configured to 50 and 30 (µm), and it can be identified that the pen-drop values in a flat area and a rolling area are about 10.8 and 10.9 (cm). "RTG (80/40)" indicates that maximum and minimum thicknesses of a bending or rolling area of a thin glass are configured to 80 and 40 (µm), and it can be identified that the pen-drop values in a flat area and a rolling area are about 18.3 and 12 (cm). "UV pattern (30/40)" indicates that minimum and maximum pattern thicknesses of a bending or rolling area of a UV molding layer are configured to 30 and 40 (µm), and it can be identified that the pen-drop values in a flat area and a rolling area are about 15.5 and 12.5 (cm).

Compared with ordinary glass (e.g., the RTG (50/30) and RTG (80/40) examples), according to the embodiments of the present disclosure (e.g., the UV pattern (30/40) example, e.g., the embodiments of FIGS. 4 to 6), since the pen-drop value in the bending or rolling area is about 12.5 cm, it can be identified that relatively superior strength is achieved with respect to thickness.

FIG. 15 is a view illustrating an electronic device according to an embodiment of the disclosure in an unfolded state.

FIG. 16 is a view illustrating the electronic device according to an embodiment of the disclosure in a folded state.

Referring to FIGS. 15 and 16, an electronic device 101 may include a housing 301, a hinge cover 340 configured to cover a foldable portion of the housing 301, and a display 330 disposed in a space formed by the housing 301. According to an embodiment, the surface on which a screen output from the display 330 is exposed is defined as the front surface of the electronic device 101 (e.g., a first front surface 310a and a second front surface 320a). The surface opposite to the front surface is defined as the rear surface (e.g., a first rear surface 310b and a second rear surface 320b) of the electronic device 101. In addition, a surface surrounding the space between the front and rear surfaces is defined as the side surface (e.g., a first side surface 310c and a second side surface 320c) of the electronic device 101. The lateral side of the electronic device 101 may be the lateral side of at least one of the first housing 310 or the second housing 320. The electronic device 101 of FIGS. 15 and 16 may be referred to as a "foldable electronic device," a "portable electronic device," or a "portable foldable electronic device." According to an embodiment, the housing 301 may be referred to as a "foldable housing." The display 330 may be referred to as a "flexible display."

According to an embodiment, the housing 301 may include a first housing 310, a second housing 320 rotatable with respect to the first housing 310, a first rear surface cover 380, and a second rear surface cover 390. The housing 301 of the electronic device 101 is not limited to the shape and assembly illustrated in FIGS. 15 and 16, but may be implemented by combinations and/or assemblies of other shapes or components. For example, in an embodiment, the first housing 310 and the first rear surface cover 380 may be integrally configured, and the second housing 320 and the second rear surface cover 390 may be integrally configured.

According to an embodiment, the first housing 310 may be connected to a hinge structure (e.g., a hinge assembly including a hinge) and may include a first front surface 310a oriented in a first direction and a first rear surface 310b oriented in a second direction opposite to the first direction. The second housing 320 may be connected to the hinge assembly and may include a second front surface 320a oriented in a third direction and a second rear surface 320b oriented in a fourth direction opposite to the third direction, and may be rotatable with respect to the first housing 310 about the hinge assembly. Accordingly, the electronic device 101 may be changed into a folded state or an unfolded state. When the electronic device 101 is in the folded state, the first front surface 310a may face the second front surface 320a, and when the electronic device 101 is in the unfolded state, the third direction may be the same as the first direction. Hereinbelow, unless otherwise stated, directions will be described with reference to the unfolded state of the electronic device 101.

According to an embodiment, the first housing 310 and the second housing 320 may be disposed on opposite sides about a folding axis A and may have an overall symmetrical shape with respect to the folding axis A. As will be described later, the angle or distance between the first housing 310 and the second housing 320 may vary depending on whether the electronic device 101 is in the unfolded state, in the folded state, or in the intermediate state. According to an embodiment, the second housing 320 additionally includes a sensor area 324 where sensors (e.g., a front camera) are disposed, but the second housing 320 may have a mutually symmetrical shape in other areas.

According to an embodiment, the folding axis A may be implemented as a plurality of (e.g., two) folding axes arranged in parallel. In the disclosure, the folding axis A is provided along the length direction (the Y-axis direction) of the electronic device 101, but the direction of the folding axis A is not limited thereto. For example (not illustrated), the electronic device 101 may include a folding axis A extending along the width direction (e.g., the X-axis direction).

According to an embodiment, the electronic device 101 may include a structure to which a digital pen is attachable. For example, the electronic device 101 may include a magnetic body configured to attach the digital pen to the side surface of the first housing 310 or the side surface of the second housing 320. According to an embodiment, the electronic device 101 may include a structure into which a digital pen is insertable. For example, a hole (not illustrated) into which the digital pen is insertable may be provided in the side surface of the first housing 310 or the side surface of the second housing 320 of the electronic device 101.

According to an embodiment, the first housing 310 and the second housing 320 may be at least partially made of a metal or non-metal material having rigidity in a level selected in order to support the display 330. The at least a portion formed of the metal material may provide a ground plane of the electronic device 101, and may be electrically connected to a ground line formed on a printed circuit board.

According to an embodiment, the sensor area 324 may be defined to have a predetermined area adjacent to an edge or a corner of the second housing 320. According to an embodiment, the arrangement, shape, and size of the sensor area 324 are not limited to the illustrated examples. For example, in another embodiment, the sensor area 324 may be provided in any area between another corner or an upper end corner and a lower end corner of the second housing 320 or in the first housing 310. In an embodiment, components embedded in the electronic device 101 to carry out various functions may be exposed on the front surface of the electronic device 101 through the sensor area 324 or through one or more openings provided in the sensor area 324. In various embodiments, the components may include various types of sensors. The sensors may include at least one of, for example, a front camera, a receiver, or a proximity sensor.

According to an embodiment, the first rear surface cover 380 may be disposed on one side of the folding axis A on a rear surface of the electronic device 101 and may have, for example, a substantially rectangular periphery, and the periphery may be surrounded by the first housing 310. Similarly, the second rear surface cover 390 may be disposed on the other side of the folding axis A of the rear surface of the electronic device 101, and the periphery of the second rear surface cover 390 may be surrounded by the second housing 320.

According to an embodiment, the first rear surface cover 380 and the second rear surface cover 390 may have substantially symmetrical shapes about the folding axis A. However, the first rear surface cover 380 and the second rear surface cover 390 do not necessarily have mutually symmetrical shapes, and in another embodiment, the electronic device 101 may include the first rear surface cover 380 and the second rear surface cover 390 having various shapes.

According to an embodiment, the first rear surface cover 380, the second rear surface cover 390, the first housing 310, and the second housing 320 may form a space in which various components (e.g., a printed circuit board or a battery) of the electronic device 101 may be disposed. According to an embodiment, one or more components may be disposed or visually exposed on the rear surface of the electronic device 101. For example, at least a portion of a sub-display may be visually exposed through at least a portion of the first rear surface cover 380. In another embodiment, one or more components or sensors may be visually exposed through at least a portion of the second rear surface cover 390. In various embodiments, the sensors may include a proximity sensor and/or a camera module 306 (e.g., a rear camera).

According to an embodiment, a front camera exposed to the front surface of the electronic device 101 through one or more openings provided in the sensor area 324 or a camera module 306 exposed through at least a portion of the second rear surface cover 390 may include one or more lenses, an image sensor, and/or an image signal processor. In some embodiments, two or more lenses (e.g., an infrared camera, a wide-angle lens, and a telephoto lens), and image sensors may be disposed on one side surface of the electronic device 101.

According to an embodiment, the hinge cover 340 may be disposed between the first housing 310 and the second housing 320 and may conceal internal components (e.g., a hinge assembly including a hinge). According to an embodiment, the hinge cover 340 may be covered by a portion of the first housing 310 and a portion of the second housing 320, or may be exposed to the outside depending on the state of the electronic device 101 (the unfolded state (flat state) or the folded state).

According to an embodiment, as illustrated in FIG. 15, when the electronic device 101 is in the unfolded state, the hinge cover 340 may be concealed by the first housing 310 and the second housing 320 and may not be exposed. According to an embodiment, as illustrated in FIG. 16, when the electronic device 101 is in a folded state (e.g., a fully folded state), the hinge cover 340 may be exposed to the outside between the first housing 310 and the second housing 320. According to an embodiment, when the electronic device 101 is in an intermediate state (i.e., folded with a certain angle) in which the first housing 310 and the second housing 320 form a predetermined angle, the hinge cover 340 may be partially exposed to the outside between the first housing 310 and the second housing 320. However, in this case, the exposed area may be smaller than that in the fully folded state. According to an embodiment, the hinge cover 340 may include a curved surface.

According to an embodiment, the display 330 may be disposed on a space defined by the housing 301. For example, the display 330 may be seated in a recess defined by the housing 301, and may constitute most of the front surface of the electronic device 101. Accordingly, the front surface of the electronic device 101 may include the display 330, and partial areas of the first housing 310 and the second housing 320, which are adjacent to the display 330. The rear surface of the electronic device 101 may include the first rear surface cover 380, an area of the first housing 310 adjacent to the first rear surface cover 380, the second rear surface cover 390, and an area of the second housing 320 adjacent to the second rear surface cover 390.

According to an embodiment, the display 330 may include a plurality of displays spaced apart from each other. For example, the display 330 may include a first display area 331 disposed on the first housing 310 and a second display area 332 disposed on the second housing 320. According to an embodiment, the first display area 331 and the second display area 332 may be rotatable about the folding axis A.

According to an embodiment, the display 330 may refer to a display that is at least partially deformable into a planar surface or a curved surface. For example, the display 330 may be a foldable or flexible display. According to an embodiment, the display 330 may include a folding area 333, a first display area 331 disposed on one side of the folding area 333 (e.g., the left side of the folding area 333 illustrated in FIG. 15), and a second display area 332 disposed on the other side of the folding area 333 (e.g., the right side of the folding area 233 illustrated in FIG. 15). However, the area division of the display 330 is exemplary, and the display 330 may be divided into a plurality of areas (e.g., four or more areas or two areas) depending on the structure or functions thereof. For example, in the embodiment illustrated in FIG. 15, the area of the display 330 may be divided by the folding area 333 or the folding axis (the axis A) extending parallel to the Y axis. However, in another embodiment, the area of the display 330 may be divided based on another folding area (e.g., a folding area parallel to the X axis) or another folding axis (e.g., a folding axis parallel to the X axis). According to an embodiment, the display 330 may be coupled to or disposed adjacent to a touch-sensitive circuit, a pressure sensor that is capable of measuring touch intensity (pressure), and/or a digitizer (not illustrated) configured to detect a magnetic field-type stylus pen.

According to an embodiment, the first display area 331 and the second display area 332 may have generally symmetrical shapes about the folding area 333. According to an embodiment (not illustrated), unlike the first display area 331, the second display area 332 may include a notch cut due to the presence of the sensor area 324, but may have a shape symmetrical to the first display area 331 in areas other than the sensor area. In other words, the first display area 331 and the second display area 332 may include portions having mutually symmetrical shapes and portions having mutually asymmetrical shapes.

Hereinafter, the operations of the first housing 310 and the second housing 320 depending on the states of the electronic device 101 (e.g., a flat or unfolded state and a folded state) and respective areas of the display 330 will be described.

According to an embodiment, when the electronic device 101 is in the unfolded state (the flat state) (e.g., FIG. 15), the first housing 310 and the second housing 320 may be disposed to substantially form an angle of 180 degrees therebetween and to be oriented in the same direction. The surface of the first display area 331 and the surface of the second display area 332 of the display 330 may form 180 degrees therebetween and may be oriented in the same direction (e.g., the front direction of the electronic device). The folding area 333 may define the same plane as the first display area 331 and the second display area 332.

According to an embodiment, when the electronic device 101 is in the folded state (e.g., FIG. 16), the first housing 310 and the second housing 320 may be disposed to face each other. The surface of the first display area 331 and the surface of the second display area 332 of the display 330 may face each other while forming a narrow angle (e.g., between 0 degrees and 10 degrees) therebetween. At least a portion of the folding area 333 may be formed as a curved surface with a predetermined curvature.

According to an embodiment, when the electronic device 101 is in the intermediate state (not illustrated), the first housing 310 and the second housing 320 may be disposed to form a certain angle therebetween. The surface of the first display area 331 and the surface of the second display area 332 of the display 330 may form an angle greater than that in the folded state and smaller than that in the unfolded state. At least a portion of the folding area 333 may form a curved surface having a predetermined curvature, and the curvature in this case may be smaller than that in the folded state.

FIG. 17 is a cross-sectional view illustrating an area of a display cover structure in an unfolded state of an electronic device, according to an embodiment of the disclosure.

FIG. 18 is a cross-sectional view illustrating an area of a display cover structure in a folded state of an electronic device, according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

According to an embodiment, depending on the state of the electronic device 101 (e.g., from the unfolded state (or flat state) to the folded state), the flexible display may be changed into the unfolded state, the intermediate state, and the folded state.

According to an embodiment, the display cover structure 600 may have a flexible structure so as to correspond to operations of the unfolded state, the intermediate state, and the folded state of the flexible display 330. For example, at least a portion of the display cover structure 600 may be changed from an area forming a flat surface into an area forming bending (or rolling) when the electronic device operates in the folded state.

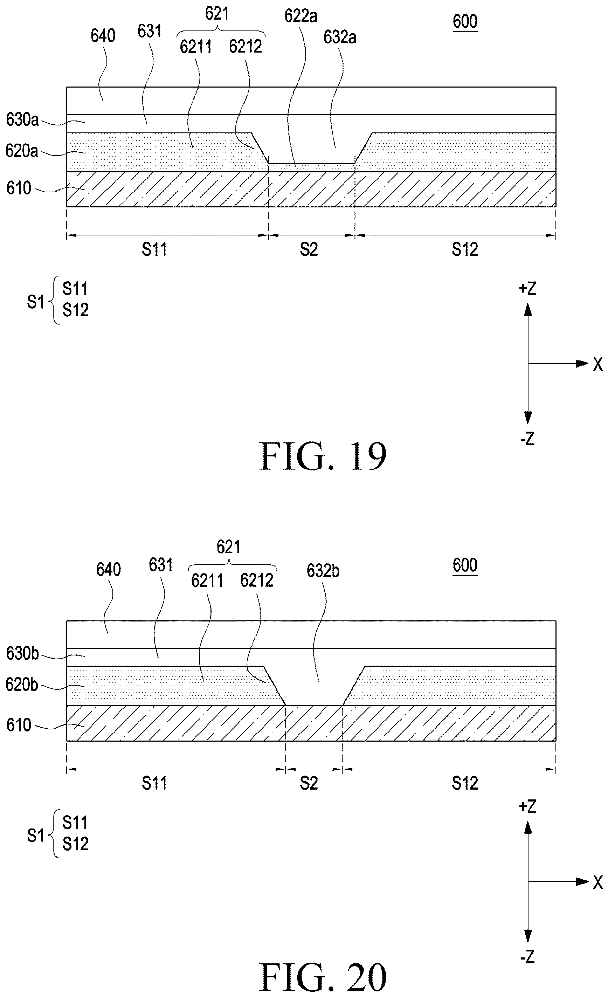

According to an embodiment, the configuration of the display cover structure 600 of FIGS. 17 and 18 may be partially or entirely the same as the configuration of the display 330 of FIGS. 15 and 16. The embodiments of FIGS. 17 and 18 may be combined in part with the embodiments of FIGS. 1 to 16 or the embodiments of FIGS. 19 to 23.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620 disposed on the thin glass 610, and a coating layer 630 disposed on the molding layer 620.

According to an embodiment, the display cover structure 600 may include thin glass 610, a molding layer 620 disposed on the thin glass 610, a coating layer 630 disposed on the molding layer 620, and a protective layer 640 disposed on the coating layer 630.

According to an embodiment, the thin glass 610 may include a first area S1 and a second area S2 extending from the first area S1 and corresponding to a bending or rolling area of a flexible display. The first area S1 may include a (1-1)^{th} area S11 and a (1-2)^{th} area S12 that are spaced apart from each other with the second area S2 interposed therebetween. For example, a flexible display (e.g., the display 330 of FIGS. 15 and 16) may include a folding area 333, a first display area 331 that is disposed on one side with respect to the folding area 333 (e.g., the left side of the folding area 333 illustrated in FIG. 15), and a second display area 332 that is disposed on the other side with respect to the folding area 333 (e.g., the right side of the folding area 333 illustrated in FIG. 15). According to an embodiment, the first area S1 (e.g., the (1-1)^{th} area S11 and the (1-2)^{th} area S12) of the thin glass 610 may be a portion, or a structure corresponding to, a first display area (e.g., the first display area 331 of FIG. 15) and a second display area (e.g., the second display area 332 of FIG. 15). The second area S2 of the thin glass 610 may be a portion of, or a structure corresponding to, a folding area 333 (e.g., the folding area 333 of FIG. 15). For example, when the flexible display 330 is defined to be limited to a flexible display panel, the (1-1)^{th} area S11 of the thin glass 610 may be disposed on the first display area 331, the (1-2)^{th} area S12 of the thin glass 610 may be disposed on the second display area 332, and the second area S2 of the thin glass 610 may be disposed on the folding area 333.

According to an embodiment, the thin glass 610 may include the first area S1 and the second area S2, and the first area S1 and the second area S2 may entirely form a uniform thickness (e.g., an identical thickness). In general, when a glass is manufactured through a physical machining process (e.g., such as CNC, etching, or polishing) such that certain areas have a different thickness, wrinkles or shape deformation may occur around certain machined areas, or cracks may occur due to weakened strength. According to an embodiment, the thin glass 610 may provide an entirely uniform thickness (e.g., an identical thickness) by excluding the above-described physical processing, thereby reducing or limiting occurrence of defects in certain areas. The cover structure 600 may provide a variable structure (e.g., a first pattern portion 621 and a second pattern portion 622) in the molding layer 620 disposed on the thin glass 610 in order to correspond to bending or rolling of the flexible display 330.

According to an embodiment, the thickness of the thin glass 610 may be about 25% to about 35% of the thickness of the cover structure 600 (e.g., a structure in which the thin glass 610, the molding layer 620, and the coating layer 630 are laminated). For example, when the cover structure 600 (e.g., a structure in which the thin glass 610, the molding layer 620, and the coating layer 630 are laminated) has a thickness of about 90 µm to about 100 µm, the thin glass 610 may have a thickness of about 22.5 µm to about 35 µm. For example, the thin glass 610 may have a thickness of about 25 µm to about 30 µm. According to an embodiment, the thin glass 610 may have a higher hardness compared to other layers of the cover structure 600 (e.g., the molding layer 620 or the coating layer 630). For example, the hardness of the thin glass 610 may have a value of about 7 to about 9.

According to an embodiment, the molding layer 620 may be disposed on the thin glass 610. The molding layer 620 may include a first pattern part 621 disposed on the first area S1 of the thin glass 610, and a second pattern part 622 disposed on the second area S2 of the thin glass 610. The first pattern part 621 of the molding layer 620 may include a (1-1)^{th} pattern part and a (1-2)^{th} pattern part, the (1-1)^{th} pattern part may correspond to the (1-1)^{th} area S11 of the thin glass 610, and the (1-2)^{th} pattern part may correspond to the (1-2)^{th} area S12 of the thin glass 610. The second pattern part 622 of the molding layer 620 may correspond to a bending or rolling area of the flexible display. For example, the second pattern part 622 may be a portion of, or a structure corresponding to, a folding area (e.g., the folding area 333 of FIG. 15) of the flexible display.

According to an embodiment, the molding layer 620 may have a structure in which a pattern varies along a length direction (e.g., the X-axis direction). The first pattern part 621 and the second pattern part 622 of the molding layer 620 may have different shapes. For example, a first thickness of the first pattern part 621 and a second thickness of the second pattern part 622 may be different from each other. The first thickness of the first pattern part 621 may be an average thickness of one or more shapes forming the first pattern part 621. The second thickness of the second pattern part 622 may be an average thickness of one or more shapes forming the second pattern part 622.

According to an embodiment, the first pattern part 621 of the molding layer 620 may form a single layer. The first thickness of the first pattern part 621 may have an entirely uniform thickness (e.g., an identical thickness). According to an embodiment, since the first pattern part 621 is a portion of, or a structure corresponding to, a flat area of the flexible display (e.g., the first display area 331 and the second display area 332 of FIG. 15), the first pattern part 621 may maintain a flat surface that does not undergo bending or rolling.

According to an embodiment, the first pattern part 621 of the molding layer 620 may form a variable layer. The first pattern part 621 may form an inclined surface in a partial section so as to extend to the second pattern part 622 having a different thickness. For example, the first pattern part 621 may include a first section 6211 having a first thickness, and a second section 6212 extending from the first section 6211 toward the second pattern part 622, the second section 6212 having a thickness less than the first thickness and varying (e.g., gradually decreasing) along a length direction (e.g., the X-axis direction). For example, as the inclined surface forms an angle of about 1 degree to about 10 degrees, a variable layer (e.g., a boundary line) of the first pattern part 621 toward the second pattern part 622 may be substantially invisible when viewed from the outside.

According to an embodiment, the second pattern part 622 of the molding layer 620 may include a protrusion structure. The second pattern part 622 of the molding layer 620 may include an array of a plurality of protruding portions 6221. The plurality of protruding portions 6221 may include shapes protruding in the +Z-axis direction. The second pattern part 622 may be a portion of, or a structure corresponding to, a bending or rolling area of a flexible display (e.g., the second display area 333 of FIG. 15), and may be formed in a pattern advantageous for the bending or rolling. The plurality of protruding portions 6221 of the second pattern part 622 may reduce a driving resistance and/or a restoring force during the bending or rolling, thereby reducing or limiting twisting and deformation of a structure laminated with the thin glass 610 and the coating layer 630.

According to an embodiment, the plurality of protruding portions 6221 of the second pattern part 622 may be disposed to be spaced apart from each other. The second pattern part 622 may include a connecting portion 6222 having a predetermined thickness and connecting adjacent protruding portions 6221 to each other. The maximum thickness (e.g., the height) of the plurality of protruding portions 6221 may be greater than that of the connecting portion 6222 connecting the plurality of protruding portions 6221.

According to an embodiment, the plurality of protruding portions 6221 of the second pattern part 622 may be disposed without being spaced apart from each other. For example, the plurality of protruding portions 6221 may have shapes including curved surfaces, and adjacent protruding portions 6221 may be continuously arranged from end portions of the protruding portions 6221.

According to an embodiment, the plurality of protruding portions 6221 of the second pattern part 622 may be an array of shapes protruding toward the coating layer 630. According to an embodiment, each of the plurality of protruding portions 6221 may have a shape such as a quadrangular shape, a polygonal shape, a trapezoidal shape, or a columnar shape, without including a curved surface. Each of the plurality of protruding portions 6221 may have a shape protruding in the +Z-axis direction, or a shape protruding in the -Z-axis direction (e.g., a recess pattern). For example, each of the plurality of protruding portions 6221 may include a curved surface. Each of the plurality of protruding portions 6221 may have various shapes such as a convex lens-shaped pattern, an uneven pattern, or a curved column pattern. However, the shapes of the plurality of protruding portions 6221 are not limited to the above-described embodiments, and design modifications may be made to various patterned shapes capable of alleviating a driving resistance without causing deformation such as twisting during bending and/or rolling of the flexible display.

According to an embodiment, the first pattern part 621 and the second pattern part 622 of the molding layer 620 may have different thicknesses. The first pattern part 621 (e.g., the first section 6211 forming the single layer) may have a first thickness, and the second pattern part 622 may have a second thickness smaller than the first thickness. According to an embodiment, the second thickness of the second pattern part 622 may have a thickness corresponding to the first thickness of the first pattern part 621 (e.g., the first section 6211 forming a single layer), or may have a thickness of about 20% to about 50% of the first thickness. Since the second thickness of the second pattern part 622 is, on average, smaller than the first thickness of the first pattern part 621, an improved may be achieved in restoring force and driving resistance of the cover structure 600 against bending and/or rolling of the flexible display.

According to an embodiment, the first pattern part 621 and the second pattern part 622 of the molding layer 620 may have different thicknesses based on a type (e.g., a thickness) of the thin glass 610. For example, when the thickness of the thin glass 610 is about 25% to about 35% of the thickness of the cover structure 600 (e.g., a structure in which the thin glass 610, the molding layer 620, and the coating layer 630 are laminated), the thickness of the molding layer 620 may be formed to be about 20% to about 40% of the thickness of the cover structure 600. For example, when the thin glass 610 has a thickness of about 30 µm, the molding layer 620 may have a thickness of about 20 µm to about 40 µm.

According to an embodiment, the molding layer 620 may have a higher hardness than other layers (e.g., the coating layer 630) of the cover structure 600. For example, the hardness of the molding layer 620 may be about 3 to about 4. Since the hardness of the coating layer 630 is about 0, the laminated structure of the molding layer 620 and the coating layer 630 may improve the strength of the cover structure 600. According to an embodiment, the molding layer 620 may be formed to have the same or a similar refractive index as that of the thin glass 610, thereby improving visibility of the cover structure 600.

According to an embodiment, the molding layer 620 may form pattern parts (e.g., a first pattern part 621 and a second pattern part 622) through an ultra-violet (UV) molding technique. The molding layer 620 may be a transparent layer and may include a polymer layer. According to an embodiment, the cover structure 600 may be implemented by placing a liquid-state molding layer 620 into a ultra-violet (UV) molding mold, disposing a thin glass 610 on the molding layer 620, and curing the molding layer 420 by at least one of UV light and heat. As the UV molding mold includes at least one pattern, the thickness of the molding layer 620 may be freely adjusted using the UV molding mold, and surface treatment may be performed only on desired areas on the surface of the molding layer 620. For example, the UV molding mold may include at least one pattern in a portion contacting the surface of the molding layer 620 so that the molding layer 620 has a variable thickness through the UV molding mold. In addition, to ensure that a plurality of protruding portions 6221 are generated in required areas on the surface of the molding layer 620, the UV molding mold may include, in a portion contacting the required areas, an engraved pattern (e.g., a recess pattern) for at least the protruding portions 6221.

According to an embodiment, the coating layer 630 may be disposed on the molding layer 620. The coating layer 630 may include a first coating portion 631 corresponding to the first pattern part 621 of the molding layer 620 and a second coating portion 632 corresponding to the second pattern part 622 of the molding layer 620. A portion of the coating layer 630 (e.g., the first coating portion 631) may have a structure in which a pattern varies along the length direction (e.g., the X-axis direction).

According to an embodiment, the coating layer 630 may be filled to have an identical height from the thin glass 610. According to an embodiment, the coating layer 630 may have a substantially uniform thickness over an entirety thereof, defined as a distance from the thin glass 610 to an upper surface of the coating layer 630. For example, as the first thickness of the first pattern part 621 of the molding layer 620 and the second thickness of the second pattern part 622 of the molding layer 620 are different from each other, the first coating portion 631 and the second coating portion 632 of the coating layer 630 may also have different thicknesses. The thickness of the first coating portion 631 may be an average thickness of one or more shapes forming the first coating portion 631. The thickness of the second coating portion 632 may be an average thickness of one or more shapes forming the second coating portion 632. For example, when the sum of the thickness of the coating layer 630 and the thickness of the molding layer 620 is defined as a predetermined value L, the thickness of the first coating portion 631 may be "L - the first thickness of the first pattern part 621," and the thickness of the second coating portion 632 may be "L - the second thickness of the second pattern part 622." As the first thickness of the first pattern part 621 is configured to be greater than the second thickness of the second pattern part 622, the thickness of the first coating portion 631 may be smaller than the thickness of the second coating portion 632. For example, when a predetermined value L of the sum of the thicknesses of the coating layer 630 and the molding layer 620 is about 60 µm, the first thickness of the first pattern part 621 is about 40 µm, and the second thickness of the second pattern part 622 is about 20 µm, the thickness of the first coating portion 631 may be about 20 µm, and the thickness of the second coating portion 632 may be about 40 µm.

According to an embodiment, the first coating portion 631 of the coating layer 630 may form a variable layer. The first coating portion 631 may form an inclined surface in a partial section so as to extend toward the second coating portion 632 having a different thickness. The inclined surface of the first coating portion 631 may correspond to the inclined surface of the first pattern part 621. For example, the inclined surface of the first coating portion 631 may form an angle of about 1 degree to about 10 degrees.

According to an embodiment, the second coating portion 632 of the coating layer 630 may include a recess structure. The second coating portion 632 of the coating layer 630 may include an array of a plurality of recess portions. The plurality of recess portions of the second coating portion 632 may be filling areas arranged to cover the protruding portions 6221 of the second pattern part 622, and may have inverted shapes corresponding to the protruding portions 6221 of the second pattern part 622. The shapes of the plurality of recess portions of the second coating portion 632 may be variously designed to correspond to various shapes of the second pattern part 622. Together with the plurality of protruding portions 6221 of the second pattern part 622, the plurality of recess portions of the second coating portion 632 may reduce a driving resistance and/or a restoring force during bending or rolling of the flexible display, thereby reducing or limiting twisting and deformation of the laminated structure forming the cover structure 600.

According to an embodiment, the coating layer 630 may have a lower hardness compared to other layers of the cover structure 600 (e.g., the thin glass 610 and the molding layer 620). For example, the hardness of the molding layer 620 may be about 3 to about 4. Since the hardness of the coating layer 630 is about 0, the laminated structure of the molding layer 620 and the coating layer 630 may improve the overall strength of the cover structure 600. According to an embodiment, the coating layer 630 may be formed to have a refractive index that is the same as or similar to that of the thin glass 610 (and/or the molding layer 620), thereby improving the visibility of the cover structure 600.

According to an embodiment, the coating layer 630 may be a film layer formed of a transparent polymer. The coating layer 630 may include an OCR filling material. The OCR filling material may have the same refractive index as the thin glass 610 (or the molding layer 620) (e.g., a refractive index of 0.05R or more), and may be a mixture including one or more of acrylic, silicone, or urethane coating solutions. The coating layer 630 may include an adhesive component. For example, the coating layer 630 may include at least one of an optical clear adhesive (OCA), a pressure sensitive adhesive (PSA), a thermally reactive adhesive, a general adhesive, or a double-sided tape.

According to an embodiment, the display cover structure 600 may include the thin glass 610, the molding layer 620 disposed on the thin glass 610, and the coating layer 630 disposed on the molding layer 620, and may further include a protective layer 640 disposed on the coating layer 630.

According to an embodiment, the protective layer 640 may be disposed on the coating layer 630. The protective layer 640 may form a single layer. The protective layer 640 may be manufactured as a layer disposed on a flat upper surface of the coating layer 630 and having an overall uniform thickness (e.g., an identical thickness).

According to an embodiment, the protective layer 640 may include one or more layers, and may be a layer for surface pressing resistance, scratch resistance, slip properties, anti-fingerprint performance, or the like. For example, the protective layer 640 may include at least one of an anti-fouling layer or anti-fingerprint layer (AF layer), a hard coating layer (HC layer), an anti-reflection layer (AR layer) or a low reflection layer (LR layer), or an anti-glare layer (AG layer).

FIG. 19 is a cross-sectional view illustrating an area of a display cover structure in an unfolded state of an electronic device, according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

The configurations of a thin glass 610, a molding layer 620a, a coating layer 630a, and/or a protective layer 640 of the display cover structure 600 of FIG. 19 may be partially or entirely the same as the configurations of the thin glass 610, the molding layer 620, the coating layer 630, and/or the protective layer 640 of the display cover structure 600 of FIGS. 17 and 18. The embodiments of FIG. 19 may be combined in part with the embodiments of FIGS. 1 to 18 or the embodiments of FIGS. 20 to 23.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620a disposed on the thin glass 610, and a coating layer 630a disposed on the molding layer 620a.

According to an embodiment, the thin glass 610 may include a first area S1 and a second area S2 extending from the first area S1 and corresponding to a bending or rolling area (e.g., the folding area 333 of FIG. 15) of a flexible display. The first area S1 may include a (1-1)^{th} area S11 and a (1-2)^{th} area S12 that are spaced apart from each other with the second area S2 interposed therebetween.

According to an embodiment, the molding layer 620a may be disposed on the thin glass 610. The molding layer 620a may include a first pattern part 621 disposed on the first area S1 of the thin glass 610, and a second pattern part 622a disposed on the second area S2 of the thin glass 610. The first pattern part 621 of the molding layer 620a may include a (1-1)^{th} pattern part and a (1-2)^{th} pattern part, the (1-1)^{th} pattern part may correspond to the (1-1)^{th} area S11 of the thin glass 610, and the (1-2)^{th} pattern part may correspond to the (1-2)^{th} area S12 of the thin glass 610. The second pattern part 622a of the molding layer 620a may correspond to a bending or rolling area of the flexible display. For example, the second pattern part 622a may be a portion of, or a structure corresponding to, a folding area (e.g., the folding area 333 of FIG. 15) of the flexible display.

According to an embodiment, the molding layer 620a may have a structure in which a pattern varies along a length direction (e.g., the X-axis direction). The first pattern part 621 and the second pattern part 622a of the molding layer 620a may have different shapes. For example, the thickness of the first pattern part 621 and the thickness of the second pattern part 622a may be different from each other. The first thickness of the first pattern part 621 may be an average thickness of one or more shapes forming the first pattern part 621. The second thickness of the second pattern part 622a may be an average thickness of one or more shapes forming the second pattern part 622a.

According to an embodiment, the first pattern part 621 of the molding layer 620a may include a first section 6211 having a uniform thickness (e.g., an identical thickness) and a second section 6212 extending from the first section 6211 and having a variable thickness. For example, the first pattern part 621 may form, in a partial section (e.g., the second section 6212), an inclined surface so as to extend to the second pattern part 622a having a different thickness.

According to an embodiment, the first pattern part 621 and the second pattern part 622a of the molding layer 620a may have different thicknesses. The first section 6211 of the first pattern part 621 may have a first thickness, and the second pattern part 622a may have a second thickness smaller than the first thickness. For example, the second thickness of the second pattern part 622a may be about 20% to about 50% of the first thickness of the first section 6211 of the first pattern part 621, and an improvement may be achieved in restoring force and driving resistance of the cover structure 600 relative to bending and/or rolling of the flexible display.

According to an embodiment, the coating layer 630a may be disposed on the molding layer 620a. The coating layer 630a may include a first coating portion 631 corresponding to the first pattern part 621 of the molding layer 620a, and a second coating portion 632a corresponding to the second pattern part 622a of the molding layer 620a. A portion of the coating layer 630a (e.g., the first coating portion 631) may form a structure in which a pattern varies along a length direction (e.g., the X-axis direction).

According to an embodiment, the coating layer 630a may be filled to have an identical height from the thin glass 610. According to an embodiment, the coating layer 630a may have an overall uniform thickness defined as a distance from the thin glass 610 to an upper surface of the coating layer 630a. For example, the thickness of the first coating portion 631 of the coating layer 630a may be smaller than the thickness of the second coating portion 632a.

According to an embodiment, the display cover structure 600 may include the thin glass 610, the molding layer 620a disposed on the thin glass 610, and the coating layer 630a disposed on the molding layer 620a, and may further include a protective layer 640 disposed on the coating layer 630a.

FIG. 20 is a cross-sectional view illustrating an area of a display cover structure in an unfolded state of an electronic device, according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

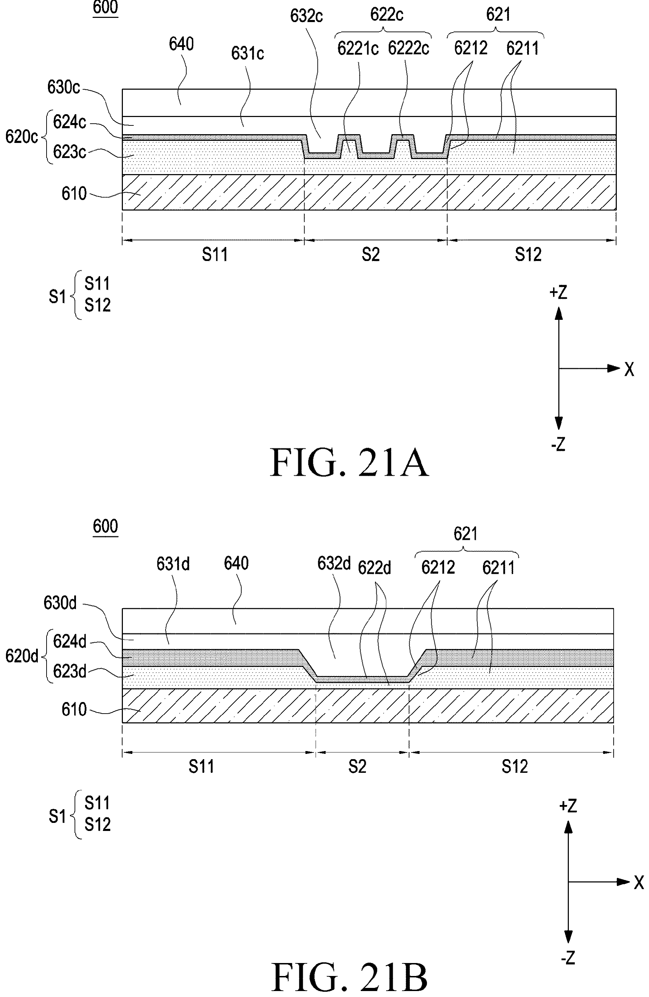

The configurations of a thin glass 610, a molding layer 620b, a coating layer 630b, and/or a protective layer 640 of the display cover structure 600 of FIG. 20 may be partially or entirely the same as the configurations of the thin glass 610, the molding layer 620, the coating layer 630, and/or the protective layer 640 of the display cover structure 600 of FIGS. 17 and 18. The embodiments of FIG. 20 may be combined in part with the embodiments of FIGS. 1 to 19 or the embodiments of FIGS. 21A to 23.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620b disposed on the thin glass 610, and a coating layer 630b disposed on the molding layer 620b.

According to an embodiment, the thin glass 610 may include a first area S1 and a second area S2 extending from the first area S1 and corresponding to a bending or rolling area (e.g., the folding area 333 of FIG. 15) of a flexible display. The first area S1 may include a (1-1)^{th} area S11 and a (1-2)^{th} area S12 that are spaced apart from each other with the second area S2 interposed therebetween.

According to an embodiment, the molding layer 620b may have a structure in which a pattern varies along a length direction (e.g., the X-axis direction). The first pattern part 621 of the molding layer 620b may include a first section 6211 having a uniform thickness (e.g., an identical thickness) and a second section 6212 extending from the first section 6211 and having a variable thickness. For example, the first pattern part 621 may form an inclined surface in a partial section (e.g., the second section 6212) so as to extend up to an area before the second area S2 of the thin glass 610 on which the molding layer 620b is not disposed.

According to an embodiment, the molding layer 620b may be disposed on the first area S1 of the thin glass 610, and only the coating layer 630b (e.g., a second coating portion 632b) may be disposed on the second area S2 of the thin glass 610. As the coating layer 630b, which has a low hardness and flexibility, is positioned in a bending and/or rolling section of the flexible display, an improvement may be achieved in restoring force and driving resistance of the cover structure 600.

According to an embodiment, the coating layer 630b may be disposed from an upper surface of the molding layer 620b to an upper surface (e.g., a surface oriented in the +Z-axis direction) of the second area S2 of the thin glass 610. The coating layer 630b may include a first coating portion 631 corresponding to the first pattern part 621 of the molding layer 620b and a second coating portion 632b corresponding to the second area S2 of the thin glass 610. A portion of the coating layer 630b (e.g., the first coating portion 631) may form a structure in which a pattern varies along a length direction (e.g., the X-axis direction).

According to an embodiment, the coating layer 630b may be filled to have an identical height from the thin glass 610. According to an embodiment, the coating layer 630b may have an overall uniform thickness defined as a distance from the thin glass 610 to an upper surface of the coating layer 630b. For example, the thickness of the first coating portion 631 of the coating layer 630b may be smaller than the thickness of the second coating portion 632b. The thickness (e.g., the height) of the second coating portion 632b of the coating layer 630b may be the sum of the thickness of the first coating portion 631 and the thickness of the first pattern part 621 (e.g., the first section 6211) of the molding layer 620b.

According to an embodiment, the display cover structure 600 may include the thin glass 610, the molding layer 620b disposed on the thin glass 610, and the coating layer 630b disposed on the molding layer 620b, and may further include a protective layer 640 disposed on the coating layer 630b.

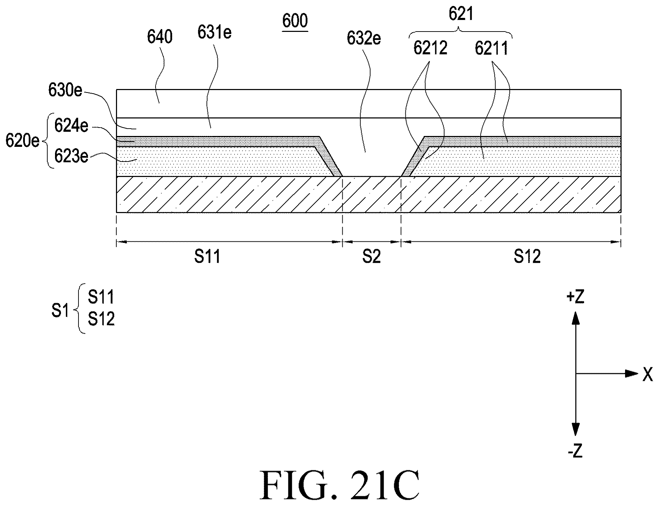

FIGS. 21A, 21B, and 21C are cross-sectional views each illustrating an area of a display cover structure in the unfolded state of an electronic device according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

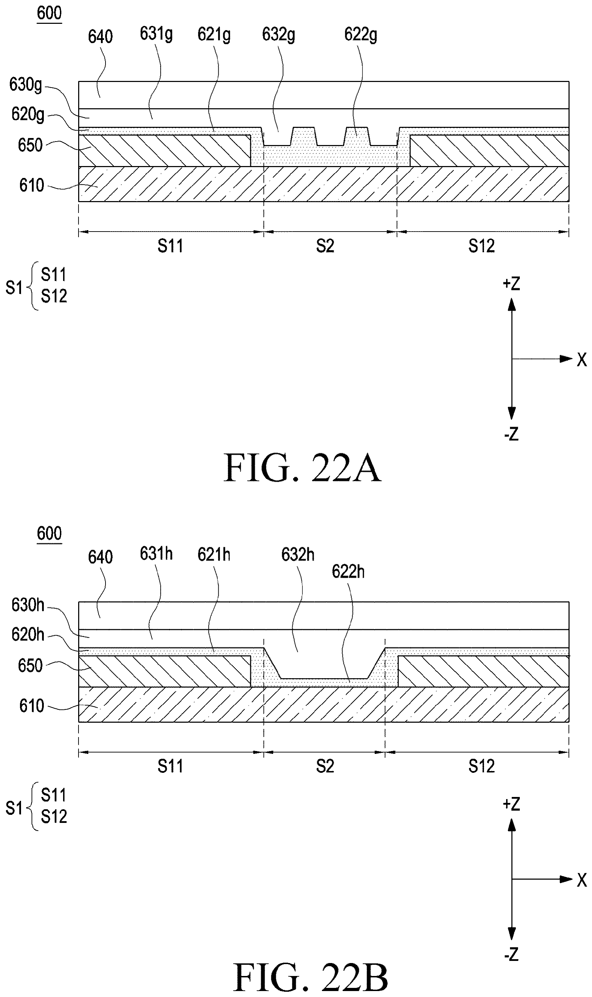

The configurations of a thin glass 610, a molding layer 620c, 620d, or 620e, a coating layer 630c, 630d, or 630e, and/or a protective layer 640 of the display cover structure 600 of FIGS. 21A, 21B, and 21C may be partially or entirely the same as the configurations of the thin glass 610, the molding layer 620, the coating layer 630, and/or the protective layer 640 of the display cover structure 600 of FIGS. 17 to 20. The embodiments of FIGS. 21A, 21B, and 21C may be combined in part with the embodiments of FIGS. 1 to 20 or the embodiments of FIGS. 22A to 23.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620c, 620d, or 620e disposed on the thin glass 610, and a coating layer 630c, 630d, or 630e disposed on the molding layer 620c, 620d, or 620e.

According to an embodiment, the molding layer 620c, 620d, or 620e may include a plurality of molding layers having different hardness values from each other. For example, the molding layer 620c, 620d, or 620e may include a laminated structure of a first molding layer 623c, 623d, or 623e having a first hardness and a second molding layer 624c, 624d, or 624e having a second hardness lower than the first hardness. The hardness of the first molding layer 623c, 623d, or 623e and the second molding layer 624c, 624d, or 624e may have a value between the hardness of the thin glass 610 and the hardness of the coating layer 630. The cover structure 600 of FIG. 21A may substantially follow the cover structure 600 of FIG. 17, the cover structure 600 of FIG. 21B may substantially follow the cover structure 600 of FIG. 19, and the cover structure 600 of FIG. 21C may substantially follow the cover structure 600 of FIG. 20.

According to an embodiment, the thin glass 610 may include a first area S1 and a second area S2 extending from the first area S1 and corresponding to a bending or rolling area (e.g., the folding area 333 of FIG. 15) of a flexible display. The first area S1 may include a (1-1)^{th} area S11 and a (1-2)^{th} area S12 that are spaced apart from each other with the second area S2 interposed therebetween.

Hereinafter, according to an embodiment referring to FIGS. 21A and 21B, the molding layer 620c or 620d may be disposed on the thin glass 610. The molding layer 620c or 620d may include a first pattern part 621 disposed on the first area S1 of the thin glass 610, and a second pattern part 622c or 622d disposed on the second area S2 of the thin glass 610. The second pattern part 622c or 622d of the molding layer 620c or 620d may correspond to a bending or rolling area of the flexible display. For example, the second pattern part 622c or 622d may be a portion of, or a structure corresponding to, a folding area (e.g., the folding area 333 of FIG. 15) of the flexible display.

According to an embodiment, the first pattern part 621 and the second pattern part 622c or 622d may each have a laminated structure of two layers (e.g., a first molding layer 623c or 623d and a second molding layer 624c or 624d). The first molding layer 623c or 623d and the second molding layer 624c or 624d forming the first pattern part 621 may each include a first section 6211 having a uniform thickness (e.g., an identical thickness) and a second section 6212 extending from the first section 6211 and having a variable thickness. The first molding layer 623c or 623d may be a high-hardness layer having a hardness value of about 3.5 to about 4.5, and the second molding layer 624c or 624d may be a medium-hardness layer having a hardness value of about 2.5 to about 3.5. According to embodiments of the disclosure, by stacking molding layers having a plurality of different hardness values, the strength of the cover structure 600 may be improved.

Referring to FIG. 21A, the laminated configurations of the first molding layer 623c and the second molding layer 624c may each include a second pattern part 622c. The second pattern part 622c may include a protrusion structure. The second pattern part 622c of the first molding layer 623c may include an array of a plurality of protruding portions 6221c. The second pattern part 622c of the second molding layer 624c may include an array of a plurality of protruding portions 6222c. The plurality of protruding portions 6221c and 6222c may include shapes protruding in the +Z-axis direction. The second pattern part 622c may be a portion of, or a structure corresponding to, a folding area of a flexible display (e.g., the second display area 333 of FIG. 15), and may be formed in a pattern advantageous for the bending or rolling. The plurality of protruding portions 6221c and 6222c of the second pattern part 622c may reduce a driving resistance and/or a restoring force during the bending or rolling, thereby reducing or limiting twisting and deformation of a structure laminated with the thin glass 610 and the coating layer 630c.

According to an embodiment, the first molding layer 623c forming the second pattern part 622c may have a quadrangular pattern protruding toward the coating layer 630c, a polygonal pattern, or an uneven pattern, and the second molding layer 624c may be a layer laminated on the first molding layer 623c and formed to have an overall uniform thickness (e.g., an identical thickness). When viewed from above the second pattern part 622c of the molding layer 620c (e.g., when viewed in the -Z-axis direction), the second molding layer 624c may be disposed to entirely cover the first molding layer 623c, such that only the second molding layer 624c is visually recognized as having a protruding shape.

Referring to FIG. 21B, the laminated configurations of the first molding layer 623d and the second molding layer 624d may each include a second pattern part 622d. According to an embodiment, the second pattern part 622d of the first molding layer 623d may form a single layer having a uniform (e.g., identical) first thickness, and the second pattern part 622d of the second molding layer 624d may be laminated on the second pattern part 622d of the first molding layer 623d and form a single layer having a uniform (e.g., identical) second thickness. The first thickness and the second thickness may be different from each other or may be the same. When viewed from above the second pattern part 622d of the molding layer 620d (e.g., when viewed in the -Z-axis direction), the second molding layer 624d may be disposed to entirely cover the first molding layer 623d, and the second molding layer 624d may appear to have a flat shape.

Hereinafter, according to an embodiment referring to FIG. 21C, the molding layer 620e may be disposed on the thin glass 610. The molding layer 620e may include a first pattern part 621 disposed on a first area S1 of the thin glass 610. The molding layer 620e may not be disposed on the second area S2 of the thin glass 610.

According to an embodiment, the molding layer 620e may have a structure in which a pattern varies along a length direction (e.g., the X-axis direction). The first pattern part 621 of the molding layer 620e may include a first section 6211 having a uniform thickness (e.g., an identical thickness) and a second section 6212 extending from the first section 6211 and having a variable thickness. For example, the first pattern part 621 may form an inclined surface in a partial section (e.g., the second section 6212) so as to extend up to an area before the second area S2 of the thin glass 610 on which the molding layer 620e is not disposed.

According to an embodiment, the first pattern part 621 may have a laminated structure of two layers (e.g., a first molding layer 623e and a second molding layer 624e). The first molding layer 623e and the second molding layer 624e forming the first pattern part 621 may each include a first section 6211 having a uniform thickness (e.g., an identical thickness) and a second section 6212 extending from the first section 6211 and having a variable thickness. The first molding layer 623e may be a high-hardness layer having a hardness value of about 3.5 to about 4.5, and the second molding layer 624e may be a medium-hardness layer having a hardness value of about 2.5 to about 3.5. According to embodiments of the disclosure, by stacking molding layers having a plurality of different hardness values, the strength of the cover structure 600 may be improved.

According to an embodiment, the molding layer 620e may be disposed on the first area S1 of the thin glass 610, and only the coating layer 630e may be disposed on the second area S2 of the thin glass 610. As the coating layer 630e, which has a low hardness and flexibility, is positioned in a bending and/or rolling section of the flexible display, an improvement may be achieved in restoring force and driving resistance of the cover structure 600.

According to an embodiment referring to FIGS. 21A, 21B, and 21C, a coating layer 630c, 630d, or 630e may be filled to have an identical height from the thin glass 610. According to an embodiment, the coating layer 630c, 630d, or 630e may have an overall uniform thickness such that a distance from the thin glass 610 to an upper surface of the coating layer 630c, 630d, or 630e is uniform. For example, the thickness of the first coating portion 631c, 631d, or 631e of the coating layer 630c, 630d, or 630e may be smaller than the thickness of the second coating portion 632c, 632d, or 632e.

According to an embodiment, the display cover structure 600 may include the thin glass 610, the molding layer 620c, 620d, or 620e disposed on the thin glass 610, the coating layer 630c, 630d, or 630e disposed on the molding layer 620c, 620d, or 620e, and may further include a protective layer 640 disposed on the coating layer 630c, 630d, or 630e.

FIGS. 22B and 22C are cross-sectional views each illustrating an area of the display cover structure in the unfolded state of an electronic device according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

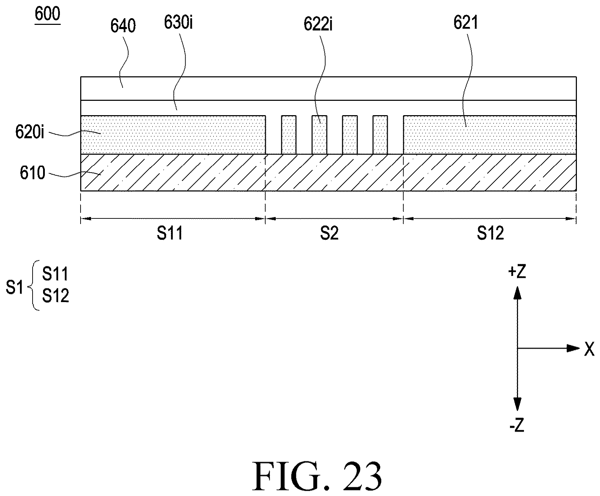

The configurations of a thin glass 610, a molding layer 620g or 620h, a coating layer 630g or 630h, and/or a protective layer 640 of the display cover structure 600 of FIGS. 22A and 22B may be partially or entirely the same as the configurations of the thin glass 610, the molding layer 620, the coating layer 630, and/or the protective layer 640 of the display cover structure 600 of FIGS. 17 to 21C. The embodiments of FIGS. 22A and 22B may be combined in part with the embodiments of FIGS. 1 to 21C or the embodiments of FIG. 23.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620g or 620h disposed on the thin glass 610, and a coating layer 630g or 630h disposed on the molding layer 620g or 620h.

According to an embodiment, a bonding glass layer 650 may be laminated on certain areas of the thin glass 610. The glass forming the cover structure 600 may include the thin glass 610 and a bonding glass layer 650 that is thicker than the thin glass 610. For example, by disposing the bonding glass layer 650 having a second thickness greater than a first thickness on a first area S1 of the thin glass 610 having the first thickness, the strength of an overall glass structure may be improved by increasing the overall thickness of the glass. The cover structure 600 of FIG. 22A may substantially follow the cover structure 600 of FIG. 17, and the cover structure 600 of FIG. 22B may follow the cover structure 600 of FIG. 19.

According to an embodiment, the thin glass 610 may include a first area S1 and a second area S2 extending from the first area S1 and corresponding to a bending or rolling area (e.g., the folding area 333 of FIG. 15) of a flexible display. The first area S1 may include a (1-1)^{th} area S11 and a (1-2)^{th} area S12 that are spaced apart from each other with the second area S2 interposed therebetween.

According to an embodiment, the bonding glass layer 650 may be disposed on the thin glass 610. The bonding glass layer 650 may be disposed on the first area S1 of the thin glass 610. The bonding glass layer 650 may not be disposed on the second area S2 of the thin glass 610. The second area S2 of the thin glass 610 may be a portion of, or a structure corresponding to, a bending or rolling area (e.g., the folding area 333 of FIG. 15) of the flexible display.

According to an embodiment, molding layer 620g or 620h may be disposed on the thin glass 610. The molding layer 620g or 620h may include a first pattern part 621g or 621h disposed on the bonding glass layer 650 (e.g., the bonding glass layer 650 laminated with the first area S1 of the thin glass 610), and a second pattern part 622g or 422i disposed on the second area S2 of the thin glass 610. The second pattern part 622g or 622h of the molding layer 620g or 620h may correspond to a bending or rolling area of the flexible display. For example, the second pattern part 622g or 622h may be a portion of, or a structure corresponding to, a folding area (e.g., the folding area 333 of FIG. 15) of the flexible display. A portion (e.g., a variable section or a second section) of the first pattern part 621g or 621h may be disposed on the first area S1 of the thin glass 610.

According to an embodiment, a coating layer 630g or 630h may be disposed on the molding layer 620g or 620h. The coating layer 630g or 630h may include a first coating portion 631g or 631h corresponding to the first pattern part 621g or 621h of the molding layer 620g or 620h, and a second coating portion 632g or 632h corresponding to the second pattern part 622g or 622h of the molding layer 620g or 620h. A portion of the coating layer 630g or 630h (e.g., the first coating portion 631g or 631h) may form a structure in which a pattern varies along a length direction thereof (e.g., the X-axis direction).

According to an embodiment, the coating layer 630g or 630h may be filled to have an identical height from the thin glass 610. According to an embodiment, the coating layer 630g or 630h may have an overall uniform thickness such that a distance from the thin glass 610 to an upper surface of the coating layer 630g or 630h is uniform. For example, the thickness of the first coating portion 631g or 631h of the coating layer 630g or 630h may be smaller, at least in part, than the thickness of the second coating portion 632g or 632h.

According to an embodiment, the display cover structure 600 may include the thin glass 610, the molding layer 620g or 620h disposed on the thin glass 610, and the coating layer 630g or 630h disposed on the molding layer 620g or 620h, and may further include a protective layer 640 disposed on the coating layer 630g or 630h.

FIG. 23 is a cross-sectional view illustrating an area of a display cover structure in an unfolded state of an electronic device, according to an embodiment of the disclosure.

According to an embodiment, an electronic device (e.g., the electronic device 101 of FIGS. 15 and 16) may include a first housing (e.g., the first housing 310 of FIGS. 15 and 16), a second housing (e.g., the second housing 320 of FIGS. 15 and 16), and a flexible display (e.g., the display 330 of FIGS. 15 and 16). The flexible display may include a flexible display panel and a display cover structure 600 formed such that at least a portion thereof is exposed to the outside to protect the flexible display panel.

The configurations of a thin glass 610, a molding layer 620i, a coating layer 630i, and/or a protective layer 640 of the display cover structure 600 of FIG. 23 may be partially or entirely the same as the configurations of the thin glass 610, the molding layer 620, the coating layer 630, and/or the protective layer 640 of the display cover structure 600 of FIGS. 17 to 22B. The embodiments of FIG. 23 may be combined in part with the embodiments illustrated in FIGS. 1 to 22B.

According to an embodiment, the display cover structure 600 of an electronic device (e.g., the electronic device 101 of FIGS. 15 and 16) may be referred to as a window cover or a cover structure. The display cover structure 600 may include a thin glass 610, a molding layer 620i disposed on the thin glass 610, and a coating layer 630i disposed on the molding layer 620i.

According to an embodiment, the thin glass 610 may include a first area S1 and a second area S2 extending from the first area S1 and corresponding to a bending or rolling area (e.g., the folding area 333 of FIG. 15) of a flexible display. The first area S1 may include a (1-1)^{th} area S11 and a (1-2)^{th} area S12 that are spaced apart from each other with the second area S2 interposed therebetween.

According to an embodiment, the molding layer 620i may be disposed on the thin glass 610. The molding layer 620i may include a pattern part disposed on the first area S1 and the second area S2 of the thin glass 610.

According to an embodiment, the molding layer 620i may be disposed on the thin glass 610. The molding layer 620 may include a first pattern part 621 disposed on the first area S1 of the thin glass 610, and a second pattern part 622i disposed on the second area S2 of the thin glass 610. According to an embodiment, the first pattern part 621 of the molding layer 620i may form a single layer. The first thickness of the first pattern part 621 may have an entirely uniform thickness (e.g., an identical thickness).

According to an embodiment, the second pattern part 622i of the molding layer 620i may include a protrusion structure. The second pattern part 622i of the molding layer 620i may include an array of a plurality of protruding portions. The plurality of protruding portions may include shapes protruding in the +Z-axis direction. The plurality of protruding portions may reduce a driving resistance and/or a restoring force during the bending or rolling, thereby reducing or limiting twisting and deformation of a structure laminated with the thin glass 610 and the coating layer 630i.

According to an embodiment, the plurality of protruding portions of the second pattern part 622i of the molding layer 620i may be disposed to be spaced apart from each other. As the molding layer 620i is not disposed in the spaces between the plurality of protruding portions, the coating layer 630i and the thin glass 610 may come into contact with each other.

According to an embodiment, the plurality of protruding portions of the second pattern part 622i may be an array of shapes protruding toward the coating layer 630. For example, each of the plurality of protruding portions may have a shape such as a quadrangular shape, a polygonal shape, a trapezoidal shape, or a columnar shape. Each of the plurality of protruding portions may have a shape protruding in the +Z-axis direction or a shape protruding in the -Z-axis direction (e.g., a recess pattern). However, the shapes of the plurality of protruding portions are not limited to the above-described embodiments, and design modifications may be made to various patterned shapes capable of alleviating a driving resistance without causing deformation such as twisting during bending and/or rolling of the flexible display.

According to an embodiment or 630i may be disposed on the thin glass 610 and the molding layer 620i. The coating layer 630i may be disposed to cover the molding layer 620i, and may be disposed on the thin glass 610 in which the molding layer 620i is not disposed (e.g., certain areas of the second pattern part 622i). The coating layer 630i may be filled to have an identical height from the thin glass 610. According to an embodiment, the coating layer 630i may have an overall uniform thickness defined as a distance from the thin glass 610 to an upper surface of the coating layer 630i.

According to an embodiment, the display cover structure 600 may include the thin glass 610, the molding layer 620i disposed on the thin glass 610, and the coating layer 630i disposed on the molding layer 620i, and may further include a protective layer 640 disposed on the coating layer 630i.

A foldable or rollable electronic device may include a flexible display disposed on the device and configured to be bendable or rollable. As a glass used to protect the flexible display, a thin glass having a small thickness may be used so as to secure a well-bendable characteristic advantageous for bending or rolling. The thin glass generally has a thickness value of about 30 µm to about 50 µm, and its strength may be reinforced by laminating polymer films on upper and lower surfaces thereof.

In the glass, when a bending/rolling area is formed to have a different (thinner) thickness by a physical machining process (e.g., CNC, etching, or polishing), wrinkles or shape deformation may occur around certain machined areas, or cracks may occur due to weakened strength. In addition, in the glass, a twisting phenomenon may occur due to expansion after reinforcement caused by a machining process associated with chemical strengthening, which may lead to product defects.

According to an embodiment of the disclosure, a foldable or rollable electronic device may include a flexible cover structure for a flexible display. According to an embodiment of the disclosure, in the cover structure, a pattern-variable structure of a laminated molding layer is applied without performing a machining process on a thin glass, which may enable free design of the overall thickness of the glass and may reduce twisting and deformation of the thin glass.

However, the problem intended to be solved by the disclosure is not limited to the above-described problems, and may be defined in various ways without departing from the spirit and scope of the disclosure.

According to an embodiment of the disclosure, in a foldable or rollable electronic device, the flexible cover structure may provide effects of improving strength, reducing a driving resistance, and/or mitigating crease by laminating, on the thin glass, a molding layer including various patterns in a bending or rolling area.

According to an embodiment of the disclosure, the flexible cover structure of a foldable or rollable electronic device may provide an overall uniform thickness (e.g., an identical thickness) by excluding physical machining and chemical machining processes on the thin glass, and may reduce or limit the occurrence of defects in certain areas.

According to an embodiment of the disclosure, a flexible cover structure of a foldable or rollable electronic device may be provided, which has a laminated structure including a thin glass, a molding layer, and a coating layer. In addition, a cover structure advantageous for a bending or rolling area may be provided through a UV pattern structure that varies depending on a position of the molding layer.

According to an embodiment of the disclosure, a flexible cover structure of a foldable or rollable electronic device may be provided with a laminated structure including a thin glass, a molding layer, and a coating layer. Above the molding layer, the coating layer may be filled to have a uniform thickness (e.g., an identical height) from the thin glass, and a consistent refractive index may be provided, so that a bending and/or rolling area may be easily implemented and visibility may be secured.

The effects that are capable of being obtained by the disclosure are not limited to those described above, and other effects not described above may be clearly understood by a person ordinarily skilled in the art to which the disclosure belongs based on the following description.

According to an embodiment of the disclosure, an electronic device (e.g., the electronic device 101 of FIGS. 1 to 3) may include a first housing 210, a second housing 220, a flexible display panel including an area corresponding to the first housing and an area corresponding to the second housing, and a flexible cover structure 400 or 600 disposed on the flexible display panel. The cover structure may include a thin glass 410 or 610, a molding layer 420 or 620, and a coating layer 430 or 630. The thin glass 410 or 610 may include a first area S1 and a second area S2 that extends from the first area and corresponds to a bending or rolling area of the flexible display panel. The molding layer 420 or 620 may include a first pattern part 421 disposed on the first area of the thin glass, and a second pattern part 422 disposed on the second area of the thin glass, and the thickness of the first pattern part may be different from the thickness of the second pattern part. The coating layer 430 or 630 may be disposed on the molding layer, and a distance from the thin glass to an upper surface of the coating layer may have an overall uniform thickness.

According to an embodiment, the first area and the second area of the thin glass may form an overall identical thickness.

According to an embodiment, the first pattern part of the molding layer may include a layer having an identical thickness, and the second pattern part of the molding layer may include an array of a plurality of protruding portions 4221.

According to an embodiment, the first pattern part of the molding layer may include a first section 4211 having a first thickness, and a second section 4212 extending from the first section to the second pattern part and varying along a longitudinal direction (an X-axis direction) to have a thickness equal to or less than the first thickness.

According to an embodiment, at least a portion of each of the plurality of protruding portions 4221 of the second pattern part may include a curved shape.

According to an embodiment, at least some of the plurality of protruding portions 4221 (e.g., adjacent protruding portions) of the second pattern part may be disposed to be spaced apart from each other.

According to an embodiment, a thickness of the thin glass may be 25% to 35% of a thickness of the cover structure.

According to an embodiment, a thickness of the molding layer may be 20% to 40% of the thickness of the cover structure, and the thickness of the first pattern part is greater than the thickness of the second pattern part.

According to an embodiment, the hardness of the molding layer may have a value between a hardness of the thin glass and the hardness of the coating layer, and refractive indices of the thin glass, the molding layer, and the coating layer may be consistent with one another.

According to an embodiment, the coating layer may include a first coating portion 431 corresponding to the first pattern part, and a second coating portion 432 corresponding to the second pattern part. The thickness of the first coating portion may be smaller than the thickness of the second coating portion, and the second coating portion may include recess portions corresponding to the protruding portions.

According to an embodiment, the electronic device may further include a protective layer 440 that is disposed on a flat upper surface of the coating layer and has an overall uniform thickness from the flat upper surface.

According to an embodiment, the molding layer may include a first molding layer 423d, 423e, or 423f having a first hardness, and a second molding layer 424d, 424e, or 424f disposed on the first molding layer and having a second hardness that is smaller than the first hardness.

According to an embodiment, the electronic device may further include a bonding glass layer that is laminated on the first area of the thin glass and has a thickness greater than the thickness of the thin glass. The bonding glass layer may be disposed to be surrounded by the first pattern part of the molding layer.

According to an embodiment, the flexible display panel may include a first display area A1 and a second display area A2 extending from the first display area, and the second display area may be configured to be rolled-in or rolled-out based on a sliding movement of the second housing.

According to an embodiment, the electronic device may further include a hinge structure of which at least a portion is disposed between the first housing 310 and the second housing 320 and rotatably connecting the first housing and the second housing. The first housing and the second housing may be arranged side by side around a folding axis A.

According to an embodiment of the disclosure, the flexible cover structure 400 or 600 may include a thin glass 410 or 610 including a first area S1 and a second area S2 that extends from the first area and is bendable or rollable, a molding layer 420 or 620 including a first pattern part 421 disposed on the first area of the thin glass and a second pattern part 422 disposed on the second area of the thin glass, the thickness of the first pattern part being different from a thickness of the second pattern part, and a coating layer 430 or 630 that is disposed on the molding layer and is filled to have an identical height from the thin glass.

According to an embodiment, the first area and the second area of the thin glass may form an overall identical thickness.

According to an embodiment, the first pattern part of the molding layer may include a layer having an identical thickness, and the second pattern part of the molding layer may include an array of a plurality of protruding portions 4221.

According to an embodiment, the first pattern part of the molding layer may include a first section 4211 having a first thickness, and a second section 4212 that extends from the first section toward the second pattern part and has a thickness that varies along a length direction (an X-axis direction) to be equal to or less than the first thickness.

According to an embodiment, the molding layer may have a thickness that ranges from 20% to 40% of the thickness of the cover structure, and the thickness of the first pattern part is greater than the thickness of the second pattern part.

## Claims

1. An electronic device 101 comprising:
a first housing 210;
a second housing 220;
a flexible display panel including an area corresponding to the first housing and an area corresponding to the second housing; and
a flexible cover structure 400 disposed on the flexible display panel,
wherein the cover structure comprises:
a thin glass 410 including a first area S1 and a second area S2 extending from the first area and corresponding to a bending or rolling area of the flexible display panel;
a molding layer 420 including a first pattern part 421 disposed on the first area of the thin glass and a second pattern part 422 disposed on the second area of the thin glass, wherein a thickness of the first pattern part is different from a thickness of the second pattern part; and
a coating layer 430 disposed on the molding layer, wherein a thickness from the thin glass to an upper surface of the coating layer is uniform throughout.

2. The electronic device of claim 1,
wherein the first area and the second area of the thin glass have the same thickness throughout.

3. The electronic device of claim 1 or 2,
wherein the first pattern part of the molding layer includes a layer having an identical thickness, and the second pattern part of the molding layer includes an array of a plurality of protruding portions (4221).

4. The electronic device of any one of claims 1 to 3,
wherein the first pattern part of the molding layer includes a first section 4211 having a first thickness, and a second section 4212 extending from the first section to the second pattern part and varying along a longitudinal direction (X-axis direction) to have a thickness equal to or less than the first thickness.

5. The electronic device of claim 3 or 4,
wherein at least a portion of each of the plurality of protruding portions (4221) of the second pattern part includes a curved shape.

6. The electronic device of any one of claims 3 to 5,
wherein at least some of the plurality of protruding portions (4221) of the second pattern part are arranged to be spaced apart from each other.

7. The electronic device of any one of claims 1 to 6,
wherein a thickness of the thin glass is 25% to 35% of a thickness of the cover structure.

8. The electronic device of any one of claims 1 to 7,
wherein a thickness of the molding layer is 20% to 40% of a thickness of the cover structure, and the thickness of the first pattern part is greater than the thickness of the second pattern part.

9. The electronic device of any one of claims 1 to 8,
wherein a hardness of the molding layer has a value between a hardness of the thin glass and a hardness of the coating layer, and refractive indices of the thin glass, the molding layer, and the coating layer are consistent with one another.

10. The electronic device of any one of claims 1 to 9,
wherein the coating layer includes a first coating portion 431 corresponding to the first pattern part and a second coating portion 432 corresponding to the second pattern part, and
wherein a thickness of the first coating portion is smaller than a thickness of the second coating portion, and the second coating portion includes recess portions corresponding to the protruding portions.

11. The electronic device of any one of claims 1 to 10, further comprising:
a protective layer (440) disposed on a flat upper surface of the coating layer and having an overall uniform thickness from the flat upper surface.

12. The electronic device of any one of claims 1 to 11,
wherein the molding layer includes a first molding layer (423d; 423e; 423f) having a first hardness, and a second molding layer (424d; 424e; 424f) disposed on the first molding layer and having a second hardness that is smaller than the first hardness.

13. The electronic device of any one of claims 1 to 11, further comprising,
a bonding glass layer disposed laminated on the first area of the thin glass and having a thickness greater than a thickness of the thin glass,
wherein the bonding glass layer is disposed to be surrounded by the first pattern part of the molding layer.

14. The electronic device of any one of claims 1 to 13,
wherein the flexible display panel includes a first display area A1 and a second display area A2 extending from the first display area, and the second display area is configured to be rolled in or rolled out based on a sliding movement of the second housing.

15. The electronic device of any one of claims 1 to 13, further comprising,
a hinge structure of which at least a portion is disposed between the first housing 310 and the second housing 320, and rotatably connetcing the first housing and the second housing,
wherein the first housing and the second housing are arranged side by side around a folding axis (A).
